(19) Europäisches Patentamt
European Patent Office
Office européen des brevets

(11) **EP 4 246 254 A1**

(12) **EUROPEAN PATENT APPLICATION**

(43) Date of publication:
**20.09.2023 Bulletin 2023/38**

(51) International Patent Classification (IPC):
**G05B 19/409** (2006.01)   **B65H 54/00** (2006.01)

(21) Application number: **23159366.6**

(52) Cooperative Patent Classification (CPC):
**G05B 19/409; B65H 54/00; G05B 2219/45193**

(22) Date of filing: **01.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.03.2022 JP 2022044527**

(71) Applicant: **TMT Machinery, Inc.**
**Osaka-shi, Osaka 541-0041 (JP)**

(72) Inventor: **NAGAI, Norihiro**
**Kyoto-shi**
**Kyoto 612-8686 (JP)**

(74) Representative: **Hoffmann Eitle**
**Patent- und Rechtsanwälte PartmbB**
**Arabellastraße 30**
**81925 München (DE)**

(54) **YARN PROCESSING FACILITY**

(57) An object of the present invention is to make it easy to obtain information of an individual remaining amount of a yarn in each of unwinding-in-progress packages used in a factory and/or information of a total remaining amount of the packages, and to reduce the burden on an operator regarding the acquisition of the individual remaining amount and/or the total remaining amount. For each of spindles 9, an information management unit 110 of a yarn processing facility 100 acquires individual remaining amount inclusive information that takes into account of an individual remaining amount indicating a remaining amount of a yarn Y included in an unwinding-in-progress package from which, as a yarn supply package Ps, the yarn Y is being wound at a predetermined yarn supply information reference time or the yarn was unwound at the yarn supply information reference time. In addition to this or in place of this, the information management unit 110 obtains total remaining amount inclusive information in which a total remaining amount calculate by adding up individual remaining amounts of the spindles 9 is taken into account. Furthermore, the information management unit 110 causes a machine output unit 5b to output the obtained individual remaining amount inclusive information and/or the obtained total remaining amount inclusive information.

FIG.7

(a)

| MACHINE IDENTIFICATION NUMBER:1A | MENU |
| --- | --- |
| TOTAL REMAINING AMOUNT [kg] | 1234.5 |
| TOTAL WOUND AMOUNT [kg] | 345.6 |

INDIVIDUAL REMAINING AMOUNT [kg]

| SPINDLE NUMBER:1 | 10.12 |
| --- | --- |
| SPINDLE NUMBER:2 | 9.34 |

INDIVIDUAL WOUND AMOUNT [kg]

| SPINDLE NUMBER:1 | 1.23 |
| --- | --- |
| SPINDLE NUMBER:2 | 2.11 |

(b)

MENU

PRINT
FILE OUTPUT
DATA ADDITION
DATA TRANSMISSION

EP 4 246 254 A1

**Description**

BACKGROUND OF THE INVENTION

The present invention relates to a yarn processing facility.

A false-twisting processing system (yarn processing facility) disclosed in Patent Literature 1 (Japanese Laid-Open Patent Publication No. 2021-024741) is configured to false-twist yarns supplied from yarn supply packages attached to pegs (yarn supply package attachment units), respectively, and form wound packages. The yarn processing facility is further provided with a sensor configured to obtain information of the remaining amount of a yarn in a yarn supply package attached to each peg. Based on the information of the remaining amount of the yarn, for example, a timing when each yarn supply package runs out of the yarn.

SUMMARY OF THE INVENTION

In a factory where a yarn processing facility is provided to produce processed yarns, typically, inventory assets are evaluated according to need. In doing so, the asset values of the yarns in production, which are liquid assets, are also evaluated. On this account, it is necessary to take account of not only the total amount of the yarns in the yarn supply packages before use but also the individual remaining amount of the yarn in each of the yarn supply packages from which the yarn is being unwound (i.e., yarn supply packages in use) and/or the total wound amount (total remaining amount) of the yarns in these yarn supply packages. In known facilities, however, an operator is required to check each unwinding-in-progress package by, for example, visual observation, in order to obtain information of the remaining amounts of the yarns in the yarn supply packages in use (plural unwinding-in-progress packages). In consideration of today's further growth of mass production, it is difficult by this method to detect the remaining amount of the yarns in a large number of unwinding-in-progress packages simultaneously. As a result, it is extremely difficult to properly obtain the information of the total remaining amount. Furthermore, the operator may be excessively burdened in order to obtain the information of the total remaining amount.

An object of the present invention is to make it easy to obtain information of an individual remaining amount of a yarn in each of unwinding-in-progress packages used in a factory and/or information of a total remaining amount of the packages, and to reduce the burden on an operator regarding the acquisition of the individual remaining amount and/or the total remaining amount.

According to a first aspect of the invention, a yarn processing facility comprises: a yarn processor which includes processing spindles each of which is able to form a wound package by processing a yarn unwound from a yarn supply package and winding the yarn onto a winding bobbin; an information management unit which is configured to be able to manage information regarding the yarn processor; and an output unit which is configured to be able to output the information, for each of the processing spindles, the information management unit executing an individual remaining amount information acquisition process of acquiring, as the information, individual remaining amount inclusive information that takes into account of an individual remaining amount indicating a remaining amount at a predetermined yarn supply information reference time of a yarn in an unwinding-in-progress package either from which, as the yarn supply package, the yarn is being unwound at the yarn supply information reference time or from which the yarn was unwound at the yarn supply information reference time and/or a total remaining amount information acquisition process of acquiring, as the information, total remaining amount inclusive information that takes into account of a total remaining amount obtained by adding up individual remaining amounts of the respective processing spindles, and the information management unit executing an individual remaining amount information output process of causing the output unit to output the individual remaining amount inclusive information of each of the processing spindles obtained in the individual remaining amount information acquisition process to be acquired by an operator and/or a total remaining amount information output process of causing the output unit to output the total remaining amount inclusive information obtained in the total wound amount information acquisition process to be acquired by the operator.

The individual remaining amount inclusive information may be information of the individual remaining amount per se or information obtained by adding another value to the individual remaining amount. The total remaining amount inclusive information may be information of the total remaining amount per se or information obtained by adding another value to the total remaining amount. According to this aspect of the present invention, the individual remaining amount inclusive information for each of the processing spindles and/or the total remaining amount inclusive information is output by the output unit. When the individual remaining amount inclusive information is output, the operator is able to understand the individual remaining amount of each of the unwinding-in-progress packages at a glance. The total remaining amount can be obtained by adding up the individual remaining amounts of the unwinding-in-progress packages based on the individual remaining amounts understood at a glance. Furthermore, in a case where the total remaining amount inclusive information is output, it is possible to know the total remaining amount in a short time. It is therefore possible to make it easy to obtain information of an individual remaining amount of a yarn in each of unwinding-in-progress packages used in a factory and/or information of a total remaining amount of the packages, and to reduce the burden on an operator regarding the acquisition of the individual remaining amount and/or the total remaining amount.

According to a second aspect of the invention, the yarn processing facility of the first aspect is arranged so that the information management unit executes the total remaining amount information acquisition process and the total remaining amount information output process.

With this aspect of the present invention, it is possible to know the total remaining amount in a short time. Therefore, the burden on the operator can be significantly reduced.

According to a third aspect of the invention, the yarn processing facility of the first or second aspect further comprises at least one yarn processor each of which is identical with the yarn processor, the information management unit executing the individual remaining amount information acquisition process and/or the total remaining amount information acquisition process for each of at least one of the yarn processors, and the information management unit executing the individual remaining amount information output process and/or the total remaining amount information output process for a yarn processor group including the at least one of the yarn processors.

The yarn processor group indicates a group of at least one yarn processor provided in one room (or one building or one office, for example) among yarn processors provided in at least one room (or at least one building or office). The aspect of the present invention makes it possible to know at once the individual remaining amount inclusive information and/or the total remaining amount inclusive information of each room, each building, or each office. This makes it possible to efficiently evaluate the inventory assets.

According to a fourth aspect of the invention, the yarn processing facility of any one of the first to third aspects is arranged so that each of the processing spindles includes a yarn supply package retaining portion which is arranged to be able to retain the unwinding-in-progress package and a reserve package different from the unwinding-in-progress package, and each of the processing spindles is arranged to be able to uninterruptedly supply the yarn when a terminal portion of the yarn in the unwinding-in-progress package is connected to a start end portion of the yarn in the reserve package.

In the present invention, because the unwinding-in-progress package and the reserve package are attached to each yarn supply package retaining portion, it is necessary to know the remaining amount of the yarn in the reserve package. This arrangement also reduces the burden on the operator, because at least the information of the individual remaining amount and/or the information of the total remaining amount can be output.

According to a fifth aspect of the invention, the yarn processing facility of the fourth aspect is arranged so that the information management unit is arranged to allow the operator to input reserve remaining amount-related information which is related to a reserve remaining amount indicating the remaining amount of the yarn in the reserve package retained by the yarn supply package retaining portion, and for each of the processing spindles, the information management unit is capable of obtaining the individual remaining amount inclusive information with the reserve remaining amount-related information being taken into account.

According to this aspect of the present invention, the operator is required to check the reserve remaining amount-related information and input it to the information management unit. However, it is possible to obtain the individual remaining amount inclusive information in which the reserve remaining amount-related information is taken into account. Therefore, the burden on the operator can be reduced to some degree.

According to a sixth aspect of the invention, the yarn processing facility of the fourth or fifth aspect is arranged so that each of the processing spindles includes an attachment information acquisition unit which is configured to be able to acquire attachment information that is information indicating whether the reserve package is attached to the yarn supply package retaining portion, and for each of the processing spindles, based on the attachment information, the information management unit is capable of obtaining the individual remaining amount inclusive information with the reserve remaining amount-related information being taken into account, the reserve remaining amount-related information being related to the reserve remaining amount that is the remaining amount of the yarn in the reserve package.

This aspect of the present invention makes it possible to significantly reduce the burden on the operator regarding the acquisition of the reserve remaining amount-related information.

According to a seventh aspect of the invention, the yarn processing facility of any one of the first to sixth aspects is arranged so that the output unit includes a display which is capable of displaying at least part of the individual remaining amount inclusive information and/or the total remaining amount inclusive information.

According to this aspect of the present invention, the operator is able to know the individual remaining amount inclusive information and/or the total remaining amount inclusive information only by viewing the display.

According to an eighth aspect of the invention, the yarn processing facility of any one of the first to seventh aspects is arranged so that the output unit includes a printer which is capable of printing, on a printing medium, at least part of the individual remaining amount inclusive information and/or the total remaining amount inclusive information.

According to this aspect of the present invention, the operator is able to know the individual remaining amount inclusive information and/or the total remaining amount inclusive information only by viewing the printed matter.

According to a ninth aspect of the invention, the yarn processing facility of any one of the first to eighth aspects is arranged so that the output unit includes a generation unit which is capable of generating an electronic file including at least part of the individual remaining amount inclusive information and/or the total remaining amount inclusive information.

According to this aspect of the present invention, it is possible to obtain the individual remaining amount inclusive information and/or the total remaining amount inclusive information by opening the generated electronic file.

According to a tenth aspect of the invention, the yarn processing facility of any one of the first to ninth aspects is arranged so that the output unit includes a communication unit which is capable of transmitting, to an external computer outside the information management unit, at least part of the individual remaining amount inclusive information and/or the total remaining amount inclusive information.

The external computer of the present invention may be not only a typical PC but also an apparatus by which information can be viewed and/or processed, such as a host computer, a mobile phone, and a tablet terminal. Furthermore, according to the aspect of the present invention, it is possible to obtain the individual remaining amount inclusive information and/or the total remaining amount inclusive information by operating the external computer.

According to an eleventh aspect of the invention, the yarn processing facility of any one of the first to tenth aspects is arranged so that the information management unit allows the operator to input, as the information, yarn supply setting information related to setting of the yarn supply information reference time.

This aspect of the present invention makes it possible to set the yarn supply information reference time in accordance with the operator's request.

According to a twelfth aspect of the invention, the yarn processing facility of the eleventh aspect is arranged so that the information management unit is capable of setting the yarn supply information reference time at any time including a past time and a future time, based on the yarn supply setting information.

This aspect of the present invention makes it possible to obtain the individual remaining amount inclusive information and/or the total remaining amount inclusive information of any time.

BRIEF DESCRIPTION OF THE DRAWINGS

FIG. 1 is a block diagram of an electric configuration of a yarn processing facility.
FIG. 2 is a side view of a false-twist texturing machine.
FIG. 3 is a schematic diagram of the false-twist texturing machine, expanded along paths of yarns.
FIG. 4(a) and FIG. 4(b) are graphs each showing the relationship between the remaining amount of a yarn in a yarn supply package and a time. FIG. 4(c) is a graph showing the relationship between the wound amount of a yarn onto a winding bobbin and a time.
FIG. 5 is a flowchart regarding calculation and output of the total remaining amount of yarns in unwinding-in-progress packages.
FIG. 6 is a flowchart regarding calculation and output of the total wound amount of yarns in in-production packages.
FIG. 7(a) shows a screen in which sets of information such as a total remaining amount and a total wound amount are displayed. FIG. 7(b) shows a screen in which menus are displayed.
FIG. 8 is a schematic diagram of a false-twist texturing machine related to a modification.

DESCRIPTION OF THE PREFERRED EMBODIMENTS

(Outline of Yarn Processing Facility)

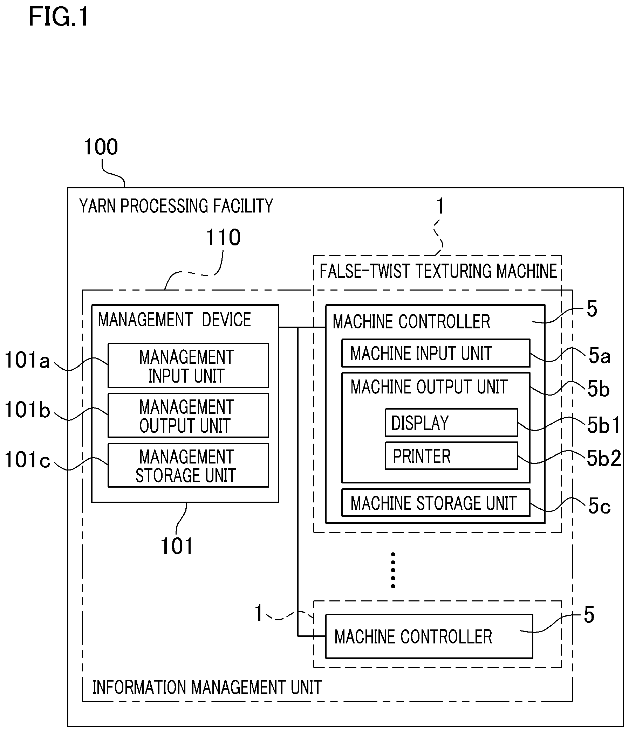

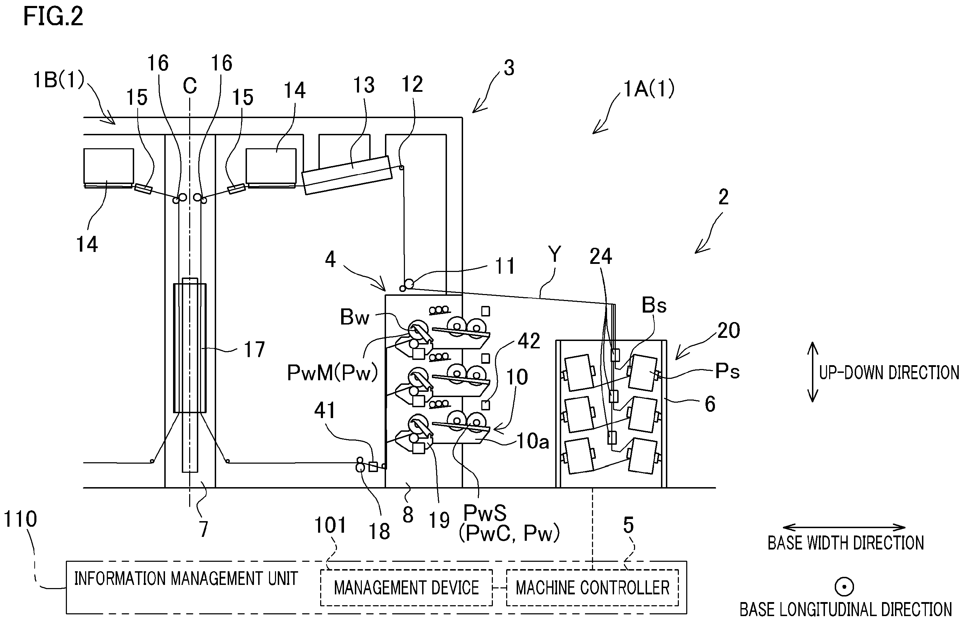

The following will describe an embodiment of the present invention. The following will outline a yarn processing facility 100 of the present embodiment, with reference to the block diagram of FIG. 1. As shown in FIG. 1, the yarn processing facility 100 includes false-twist texturing machines 1 (yarn processors of the present invention) and a management device 101. The false-twist texturing machines 1 are, for example, aligned along a predetermined base longitudinal direction (see e.g., FIG. 2). Each false-twist texturing machine 1 can perform false twisting of yarns Y (see e.g., FIG. 2) made of, for example, synthetic fibers such as polyester and nylon (polyamide fibers). Each yarn Y is, for example, a multi-filament yarn formed of filaments (not illustrated). As described below, each false-twist texturing machine 1 is configured to process yarns Y supplied from a yarn supplying unit 2 by a processing unit 3 and form wound packages Pw by winding the yarns Y onto winding bobbins Bw attached to a winding unit 4. Each false-twist texturing machine 1 is controlled by a machine controller 5 that is a computer device provided in each false-twist texturing machine 1.

The management device 101 is a host computer configured to integrally manage information obtained by the machine controllers 5. The management device 101 includes a management input unit 101a (e.g., a mouse and a keyboard), a management output unit 101b (e.g., a display), and a management storage unit 101c (e.g., a hard disk).

The information management unit 110 of the present embodiment is equivalent to a combination of the management device 101 and the machine controllers 5. The information managed by the information management unit 110 will be detailed later.

(Overall Structure of False-Twist Texturing Machine)

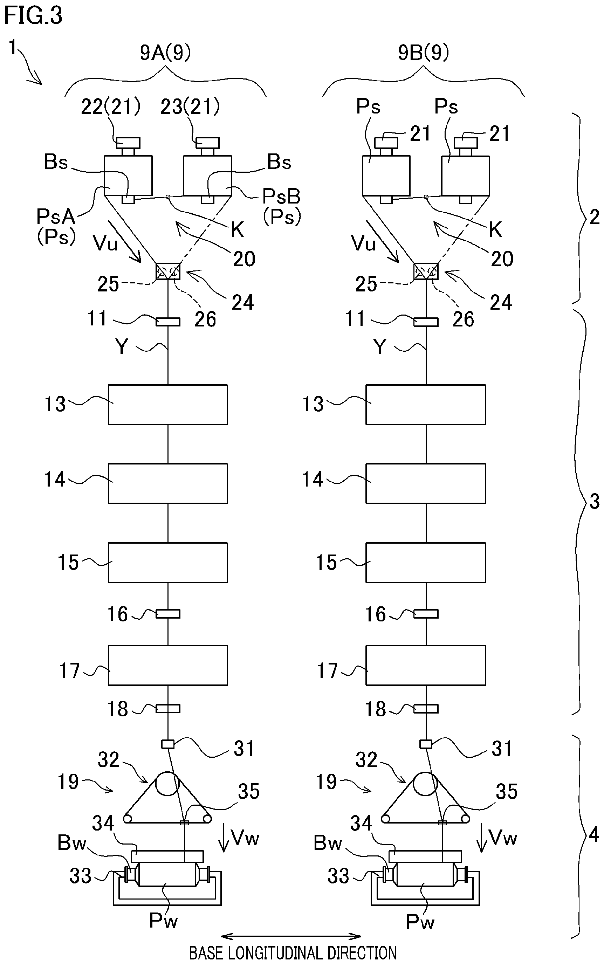

Now, the overall structure of a false-twist texturing machine 1 will be described with reference to FIG. 2 and FIG. 3. FIG. 2 is a profile of the false-twist texturing machine 1. FIG. 3 is a schematic diagram of the false-twist texturing machine 1, expanded along paths of yarns Y (yarn paths). Hereinafter, a vertical direction to the sheet of FIG. 2 is defined as the above-described base longitudinal direction, and a left-right direction to the sheet is defined as a base width direction. The direction orthogonal to the base longitudinal direction and the base width direction is defined as the up-down direction (vertical direction) in which the gravity acts. A direction in which a yarn Y runs will be referred to as a yarn running direction. The false-twist texturing machine 1 includes a yarn supplying unit 2 for supplying the yarns Y, a processing unit 3 which processes (false-twists) the yarns Y supplied from the supplying unit 2, a winding unit 4 which winds the yarns Y processed by the processing unit 3 onto a winding bobbins Bw, and the machine controller 5.

The yarn supplying unit 2 includes a creel stand 6 retaining yarn supply packages Ps, and is configured to be able to simultaneously supply the yarns Y to the processing unit 3. The processing unit 3 is configured to unwind the yarns Y from the yarn supplying unit 2 and process the yarns Y. In the processing unit 3, the following members are provided in this order from the upstream in the yarn running direction: first feed rollers 11; a twist-stopping guide 12; a first heater 13; a cooler 14; a false-twisting device 15; second feed rollers 16; a second heater 17; and third feed rollers 18. These constituent features of the processing unit 3 are provided in, for example, each of later-described spindles 9 (see FIG. 3). The winding unit 4 includes plural winding devices 19. Each winding device 19 winds the yarn Y for which the false winding has been performed at the processing unit 3 onto the winding bobbin Bw, and forms a wound package Pw. The winding part 4 is further provided with automatic doffers 10 which correspond to the respective winding devices 19 and are configured to replace completed wound packages Pw with new empty winding bobbins Bw.

The machine controller 5 is configured to control the constituent features of the yarn supplying unit 2, the processing unit 3, and the winding unit 4. The machine controller 5 is, for example, a typical computer device. The machine controller 5 includes a machine input unit 5a, a machine output unit 5b (output unit of the present invention), and a machine storage unit 5c (see FIG. 1). The machine input unit 5a includes, for example, a mouse, touch panel, and/or a keyboard that are not illustrated, and is arranged to be operable by an operator. The display machine output unit 5b includes, for example, a known display 5b1 and a known printer 5b2 and is capable of outputting information. The machine storage unit 5c is configured to store various sets of information for controlling the constituent features of the yarn supplying unit 2, the processing unit 3, and the winding unit 4. The machine controller 5 is configured to control the constituent features of the yarn supplying unit 2, the processing unit 3, and the winding unit 4 based on the sets of information. Alternatively, the machine controller 5 may indirectly control the constituent features of the yarn supplying unit 2, the processing unit 3, and the winding unit 4 through controllers (not illustrated) for controlling these constituent features. The machine controller 5 is electrically connected to the management device 101 which is a host computer. The management device 101 is capable of performing later-described determinations and/or calculations by utilizing information obtained by the machine controller 5.

Each of the false-twist texturing machines 1 includes a main base 7 and a winding base 8 which are placed to be spaced apart from each other in the base width direction. The main base 7 and the winding base 8 are substantially identical in length in the base longitudinal direction. The main base 7 and the winding base 8 are arranged to face each other in the base width direction. The false-twist texturing machine 1 includes units which are termed spans each of which includes a pair of the main base 7 and the winding base 8. In one span, each device is placed so that the yarns Y running while being aligned in the base longitudinal direction can be subjected to false-twist texturing at the same time. In the false-twist texturing machine 1, the spans are placed in a left-right symmetrical manner to the sheet, with a center line C of the base width direction of the main base 7 as a symmetry axis (main base 7 is shared between the left span and the right span). The spans are aligned in the base longitudinal direction. In FIG. 2, a false-twist texturing machine 1A is shown in the right side of the center line C of the figure, as one of the false-twist texturing machines 1. In FIG. 2, furthermore, another false-twist texturing machine 1B different from the false-twist texturing machine 1A is shown in the left side of the center line C of the figure.

A group of constituent features through which a single yarn Y supplied from the yarn supplying unit 2 passes before reaching the winding unit 4 is termed a spindle. To put it differently, each of the false-twist texturing machines 1 includes spindles 9 (processing spindles of the present invention; see FIG. 3) that are identical in number with the winding devices 19 included in each false-twist texturing machine 1. For example, FIG. 3 shows two spindles 9 (spindles 9A and 9B). Roughly speaking, the spindles 9 are aligned along the base longitudinal direction. The inclusion relation is as follows: the false-twist texturing machine 1 includes plural spans, and each span includes plural spindles 9. The false-twist texturing machine 1 is able to false-twist the yarn Y in the spindle 9 to which the yarn Y is threaded.

(Yarn Supplying Unit)

The structure of the yarn supplying unit 2 will be described with reference to FIG. 2 and FIG. 3. The creel stand 6 of the yarn supplying unit 2 includes yarn supply package retaining portions 20 (see FIG. 3) which correspond to the respective spindles 9. Each of the yarn supply package retaining portions 20 is arranged so that two yarn supply packages Ps are attached and detached to and from the portion. In other words, each yarn supply package retaining portion 20 has two package attachment units 21. For the sake of convenience, one of the two package attachment units 21 is termed a first attachment unit 22, whereas the other is termed a second attachment unit 23. To and from each of the first attachment unit 22 and the second attachment unit 23, a single yarn supply package Ps can be attached and detached. The attachment and detachment of the yarn supply packages Ps to and from the package attachment unit 21 are performed, by, for example, an operator.

Each yarn supply package retaining portion 20 of the yarn supplying unit 2 is arranged to be able to uninterruptedly supply the yarn Y by the arrangement described below. For example, as shown in FIG. 3, a yarn supply package PsA that is one of the yarn supply packages Ps is attached to the first attachment unit 22. On the other hand, another yarn supply package PsB different from the yarn supply package PsA is attached to the second attachment unit 23. When the yarn Y is being unwound from the yarn supply package PsA, the yarn supply package PsA is equivalent to the unwinding-in-progress package of the present invention. The yarn supply package PsB in this case is equivalent to a reserve package of the present invention. A terminal portion of the yarn Y in the yarn supply package PsA is joined with (connected to) a start end portion of the yarn Y in the yarn supply package PsB. Due to this, a node K (yarn connecting portion) is formed between the two yarns Y. This arrangement makes it possible to uninterruptedly supply the yarn Y from the yarn supply package PsB after the yarn supply package PsA becomes empty. To be more specific, immediately after the supply of the yarn Y from the yarn supply package PsA ends and the yarn supply package PsA becomes empty, the node K is pulled to the downstream side in the yarn running direction (i.e., to the winding device 19 side), with the result that the yarn Y is unwound from the yarn supply package PsB. In other words, after unwinding of the yarn Y from the yarn supply package Ps attached to one package attachment unit 21 finishes, unwinding of the yarn Y from the next yarn supply package Ps attached to the other package attachment unit 21 starts. For the sake of convenience, this action will be referred to as yarn supply package switching. Because of this, the yarn Y is uninterruptedly supplied. Thereafter, the yarn supply packages Ps (yarn supplying bobbin Bs) having become empty is replaced with a new yarn supply package Ps by, for example, the operator.

On the downstream side in the yarn running direction of each yarn supply package retaining portion 20, a yarn detection sensor 24 is provided. The yarn detection sensor 24 is configured to be able to detect from which one of the attachment units, the first attachment unit 22 and the second attachment unit 23, the yarn Y is being supplied. As shown in FIG. 3, the yarn detection sensor 24 includes a first detection unit 25 and a second detection unit 26. The first detection unit 25 is configured to be able to detect whether the yarn Y is being supplied from the first attachment unit 22. The second detection unit 26 is configured to be able to detect whether the yarn Y is being supplied from the second attachment unit 23. Each of the first detection unit 25 and the second detection unit 26 is, for example, an optical sensor configured to optically detect the yarn Y. For further details of the yarn detection sensor 24, see e.g., Japanese Patent No. 5873105. Alternatively, the first detection unit 25 and the second detection unit 26 may be contact sensors, for example.

(Processing Unit)

The structure of the processing unit 3 will be described with reference to FIG. 2 and FIG. 3. The following will describe only portions of the processing unit 3, which correspond to one spindle 9.

The first feed rollers 11 are arranged to unwind a yarn Y from a yarn supply package Ps attached to the yarn supplying unit 2 and feed the yarn Y to the first heater 13. The first feed rollers 11 are provided on the upstream side in the yarn running direction of the twist-stopping guide 12. The conveyance speed of conveying the yarn Y by the first feed rollers 11 is substantially identical with unwinding speed Vu (see FIG. 3) at which the yarn Y is unwound from the yarn supply package Ps. Information of a set value of the conveyance speed of the yarn Y by the first feed rollers 11 is stored in, for example, the machine controller 5 in advance. On the upstream side in the yarn running direction of the first feed rollers 11, an unillustrated cutter may be provided. When yarn breakage occurs, unfavorable winding of the yarn Y onto a rotationally-driven member such as the first feed rollers 11 can be prevented by cutting the yarn Y by the cutter.

The twist-stopping guide 12 is provided to prevent twist of the yarn Y formed by the false-twisting device 15 from being propagated to the upstream in the yarn running direction of the twist-stopping guide 12. The twist-stopping guide 12 is placed downstream of the first feed rollers 11 in the yarn running direction and upstream of the first heater 13 in the yarn running direction.

The first heater 13 heats the yarns Y sent from the first feed rollers 11. The first heater 13 is placed downstream of the twist-stopping guide 12 in the yarn running direction and upstream of the cooler 14 in the yarn running direction.

In the present embodiment, the first heater 13 is arranged to heat a single yarn Y for the sake of simplicity. The disclosure, however, is not limited to this arrangement. The first heater 13 may be arranged to be able to simultaneously heat plural yarns Y.

The cooler 14 is configured to cool the yarn Y heated at the first heater 13. The cooler 14 is placed downstream of the first heater 13 in the yarn running direction and placed upstream of the false-twisting device 15 in the yarn running direction. In the present embodiment, the cooler 14 is arranged to cool a single yarn Y for the sake of simplicity. The disclosure, however, is not limited to this arrangement. The cooler 14 may be arranged to be able to simultaneously cool plural yarns Y.

The false-twisting device 15 is configured to twist the yarn Y. The false-twisting device 15 is a so-called disc-friction-type false-twisting device, for example. The disclosure, however, is not limited to this arrangement. The false-twisting device 15 is placed downstream of the cooler 14 in the yarn running direction and upstream of the second feed rollers 16 in the yarn running direction.

The second feed rollers 16 are configured to send the yarns Y processed by the false-twisting device 15 to the second heater 17. The conveyance speed of conveying the yarn Y by the second feed rollers 16 is higher than the conveyance speed of conveying the yarn Y by the first feed rollers 11. The yarn Y is therefore drawn between the first feed rollers 11 and the second feed rollers 16. Information of a set value of the conveyance speed of the yarn Y by the second feed rollers 16 is stored in, for example, the machine controller 5 in advance.

The second heater 17 heats the yarn Y sent from the second feed rollers 16. The second heater 17 extends along the vertical direction. The second heater 17 is arranged to heat a single yarn Y for the sake of simplicity. The disclosure, however, is not limited to this arrangement. The second heater 17 may be arranged to be able to simultaneously heat plural yarns Y.

The third feed rollers 18 send the yarn Y heated by the second heater 17 to the winding device 19. The conveyance speed of conveying the yarn Y by the third feed rollers 18 is lower than the conveyance speed of conveying the yarn Y by the second feed rollers 16. The yarn Y is therefore relaxed between the second feed rollers 16 and the third feed rollers 18. Information of a set value of the conveyance speed of the yarn Y by the third feed rollers 18 is stored in, for example, the machine controller 5 in advance.

On the downstream side in the yarn running direction of the third feed rollers 18 and on the upstream side in the yarn running direction of the winding device 19 (described later), a yarn feeler 41 is provided. The yarn feeler 41 is configured to be able to detect whether or not the yarn Y is running between the third feed rollers 18 and the winding device 19 in the yarn running direction.

In the processing unit 3 arranged as described above, the yarn Y drawn between the first feed rollers 11 and the second feed rollers 16 is twisted by the false-twisting device 15. The twist formed by the false-twisting devices 15 propagates to the twist-stopping guide 12 but does not propagate to the upstream of the twist-stopping guide 12 in the yarn running direction. The yarn Y which is twisted and drawn is heated at the first heater 13 and thermally set. After that, the yarn Y is cooled at the cooler 14. The yarn Y is untwisted on the downstream of the false-twisting device 15. However, each filament is maintained to be wavy in shape on account of the thermal setting described above. After being false-twisted by the false-twisting device 15, the yarn Y is thermally set at the second heater 17 while being relaxed between the second feed rollers 16 and the third feed rollers 18, and then the yarn Y is guided to the downstream side in the yarn running direction. Finally, the yarn Y sent from the third feed rollers 18 is wound onto the winding bobbin Bw by the winding device 19. Accordingly, the wound package Pw is formed.

(Winding Unit)

The structure of the winding unit 4 will be described with reference to FIG. 2 and FIG. 3. The winding unit 4 includes the winding devices 19 configured to wind the yarns Y onto the winding bobbins Bw and the automatic doffers 10 (see FIG. 2) provided to correspond to the respective winding devices 19. The winding devices 19 belong to the respective spindles 9 (see FIG. 3). Each winding device 19 includes, for example, a fulcrum guide 31, a traverse unit 32, a cradle 33, and a winding roller 34. The fulcrum guide 31 is a guide which functions as a fulcrum when the yarn Y is traversed. For example, the traverse unit 32 can traverse the yarn Y by a traverse guide 35 which is attached to an endless belt driven in a reciprocating manner by a motor. The cradle 33 can support the winding bobbin Bw (wound package Pw) to be rotatable. The winding roller 34 is arranged to rotate the wound package Pw and to apply contact pressure to the surface of the wound package Pw. The winding roller 34 is rotationally driven by an unillustrated motor while being in contact with the surface of the wound package Pw, for example. With this arrangement, the wound package Pw is passively rotated by the friction force and the shape of the wound package Pw is adjusted by the contact pressure applied to the surface of the wound package Pw. Instead of rotationally driving the winding roller 34, the wound package Pw may be directly rotationally driven by an unillustrated motor.

The automatic doffer 10 is arranged to detach the wound package Pw from the winding device 19 and attach an empty winding bobbin Bw to the winding device 19. To put it differently, the automatic doffer 10 is arranged to be able to replace the completed wound package Pw with an empty winding bobbin Bw in the winding unit 4. The automatic doffer 10 is provided with an unillustrated cutter which is able to cut the yarn Y at around the wound package Pw. As the running yarn Y is cut by the cutter, the formation of the wound package Pw is completed. Even after the yarn is cut by the cutter, the yarn Y is unwound from the yarn supply package Ps at substantially the same speed as the winding onto the winding bobbin Bw, and is kept supplied to the winding device 19 side. The automatic doffer 10 includes an unillustrated suction which is able to suck, capture, and hold the running yarn supplied to the winding device 19, after the finish of the formation of the wound package Pw and until the start of the winding of the yarn Y onto the next winding bobbin Bw. Before the yarn Y is threaded to the winding bobbin Bw to which the yarn Y is to be wound next, a part of the yarn Y sucked by the suction is removed. For details of the structure of the automatic doffer 10, see Japanese Laid-Open Patent Publication No. H6-212521, for example.

In addition to the above, the automatic doffer 10 includes a stocker 10a. The stocker 10a is arranged to be able to temporarily store a wound package Pw (hereinafter, a completed package PwC) that is completely formed and detached from the winding device 19. The stocker 10a faces, for example, a space formed between the creel stand 6 and the winding base 8. A completed package PwC temporarily stored in the stocker 10a (in-stock package PwS) is collected by, for example, the operator. In the present embodiment, the stocker 10a provided in each of the spindles 9 is arranged to be able to temporarily store plural completed packages PwC. The stocker 10a includes an in-stock package detection unit 42 which is configured to detect the number of in-stock packages PwS. The in-stock package detection unit 42 includes, for example, plural sensors (not illustrated) . Each sensor may be a reflective optical sensor, for example. Each sensor is configured to be able to detect a single in-stock package PwS. Based on a detection result of the in-stock package detection unit 42, the machine controller 5 acquires the information of the number of in-stock packages PwS temporarily stored in the stocker 10a. The in-stock package PwS is collected by, for example, the operator.

In the vicinity of the winding device 19, an unillustrated yarn threading device is provided, for example. The yarn threading device is configured to thread the yarn Y to an empty winding bobbin Bw attached to the winding device 19.

In the winding unit 4 structured as above, the yarn Y which is sent from the third feed rollers 18 described above is wound onto the winding bobbin Bw by each winding device 19, and the wound package Pw is formed (winding process). As the yarn Y is cut by the cutter of the automatic doffer 10, the winding process of winding the yarn Y onto the winding bobbin Bw is finished. Almost at the same time, the yarn Y supplied to the winding device 19 is sucked and retained by the suction, and the wound package Pw is detached from the cradle 33 by the automatic doffer 10. Immediately after this, a new empty winding bobbin Bw is attached to the cradle 33 by the automatic doffer 10. Furthermore, the yarn Y is threaded to the new winding bobbin Bw by the yarn threading device. As a result, it becomes possible to start winding of the yarn Y onto the new winding bobbin Bw. For the sake of convenience, a wound package Pw which is being formed by the winding device 19 will be referred to as an in-production package PwM.

In a factory where the yarn processing facility 100 is provided to produce processed yarns, inventory assets are typically evaluated according to need. In doing so, the asset values of the yarns Y in production, which are liquid assets, are also evaluated. On this account, it is necessary to take account of not only the total amount of the yarns Y in the yarn supply packages Ps before use but also the remaining amount of the yarn Y in each of the yarn supply packages Ps from which the yarn Y is being unwound (i.e., yarn supply packages Ps in use) and/or the total wound amount (total remaining amount) of the yarns in these yarn supply packages Ps. In known facilities, however, an operator is required to check each unwinding-in-progress package by, for example, visual observation, in order to obtain information of the remaining amounts of the yarns Y in the yarn supply packages Ps in use (hereinafter, plural unwinding-in-progress packages). In consideration of today's further growth of mass production, it is difficult by this method to know the remaining amounts of the yarns Y in a large number of unwinding-in-progress packages simultaneously. As a result, it is extremely difficult to properly obtain the information of the total remaining amount. Furthermore, the operator may be excessively burdened in order to obtain the information of the total remaining amount.

In such factories, when the inventory assets are evaluated, the asset value of wound packages Pw in production, which are liquid assets, is also evaluated. On this account, it is necessary to take account of not only the total amount of the yarns Y in the wound packages Pw having already been formed but also the individual wound amount of the yarn Y in each wound package Pw on which the yarn is being wound (i.e., in production) and/or the total wound amount of the yarns Y in these wound packages Pw in production. In known facilities, however, an operator is required to check packages in production one by one by, for example, visual observation, in order to obtain information of the wound amounts of the yarns Y in the wound packages Pw in production (i.e., in-production packages PwM). In consideration of today's further growth of mass production, it is difficult by this method to know the wound amounts of the yarns Y in a large number of in-production packages simultaneously. As a result, it is extremely difficult to properly obtain the information of the total wound amount. Furthermore, the operator may be excessively burdened in order to obtain the information of the total wound amount.

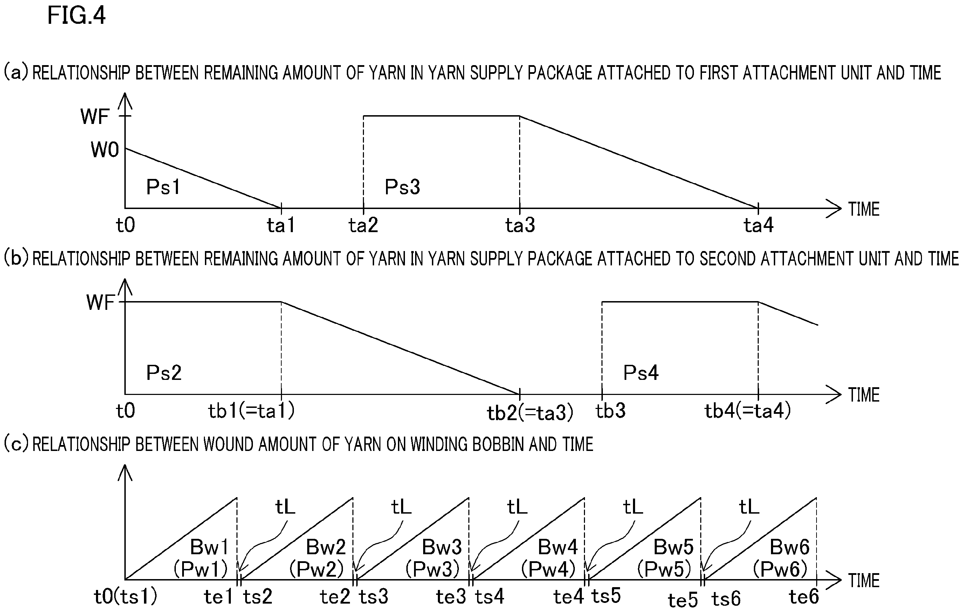

For the reason described above, the information management unit 110 executes later-described information processing to make it easy to obtain information of the individual remaining amount or total remaining amount of the yarns Y in the unwinding-in-progress packages or information of the individual wound amount or total wound amount of the yarns Y in the in-production packages PwM, and to reduce the burden of the acquisition of these sets of information on the operator. In a specific example, the information management unit 110 obtains and manages sets of information related to matters shown in graphs in FIG. 4(a) to FIG. 4(c). Hereinafter, unless otherwise specified, the explanation deals with one specific spindle 9 among the spindles 9.

(Specific Examples of Matters)

Before the information obtained by the information management unit 110 is specifically described, the following will describe matters shown in the graphs in FIG. 4(a) to FIG. 4(c) and times at which the respective matters occur, as background knowledge for easier understanding of the explanations below. The information management unit 110 acquires information related to at least one of the matters shown in the graphs in FIG. 4(a) to FIG. 4(c) (details will be given later). Each time described below is not a time predicted by a prediction means but a time at which each matter actually occurs.

FIG. 4(a) is a graph showing the relationship between the remaining amount (vertical axis) of a yarn Y in a yarn supply package Ps (specifically, a yarn supply package Ps1, Ps3) attached to the first attachment unit 22 and a time (horizontal axis). FIG. 4(b) is a graph showing the relationship between the remaining amount (vertical axis) of a yarn Y in a yarn supply package Ps (specifically, a yarn supply package Ps2) attached to the second attachment unit 23 and a time (horizontal axis). FIG. 4(c) is a graph showing the relationship between the wound amount (vertical axis) of a yarn Y on a winding bobbin Bw (specifically, a winding bobbin Bw1, Bw2, Bw3, Bw4, Bw5, Bw6) and a time (horizontal axis). In all of the graphs in FIG. 4(a) to FIG. 4(c), a time t0 at which winding of the yarn Y onto the winding bobbin Bw1 starts is the origin. In the present embodiment, in a state in which the yarn Y has not been unwound from each yarn supply package Ps at all (i.e., each package is fully wound), the weight (initial weight) of each yarn supply package Ps is WF.

To begin with, at the time t0, the yarn supply package Ps1 has been attached to the first attachment unit 22. The yarn supply package Ps2 has been attached to the second attachment unit 23. The remaining weight of the yarn Y in the yarn supply package Ps1 is W0 (that is smaller than WF). The remaining weight of the yarn Y in the yarn supply package Ps2 is WF. A terminal portion of the yarn Y in the yarn supply package Ps1 is joined with a start end portion of the yarn Y in the yarn supply package Ps2 so that a node K is formed.

At a time t0 (time ts1), the attachment of a winding bobbin Bw1 to the cradle 33 by the automatic doffer 10 is completed, and winding of the yarn onto the winding bobbin Bw1 starts. On this account, the time ts1 is the winding start time at which winding of the yarn Y onto the winding bobbin Bw1 starts. At the same time, the yarn Y is unwound from a yarn supply package Ps1. As time passes, the remaining amount (remaining weight) of the yarn Y in the yarn supply package Ps1 decreases whereas the wound amount (wound weight) of the yarn Y wound onto the winding bobbin Bw1 increases. At a time te1, as the yarn Y is cut by the cutter of the automatic doffer 10, the winding process of winding the yarn Y onto the winding bobbin Bw1 is finished. On this account, the time te1 is the winding end time at which winding of the yarn Y onto the winding bobbin Bw1 ends (i.e., formation of the wound package Pw1 is completed). Onto the winding bobbin Bw1, only the yarn Y supplied from the yarn supply package Ps1 has been wound. Cutting of the yarn Y by the cutter, suction and capture of the yarn Y by the suction (i.e., start of sucking and removal of the yarn Y), and detachment of the winding bobbin Bw1 (wound package Pw1) from the cradle 33 are almost simultaneously performed. Subsequently, at a time ts2 immediately after the time te1, attachment of a winding bobbin Bw2 to the cradle 33 by the automatic doffer 10 is completed and winding of the yarn Y onto a winding bobbin Bw2 starts (i.e., winding bobbin replacement is completed). There is a slight time lag tL between the winding end time (te1) of the winding bobbin Bw1 and the winding start time (ts2) of the winding bobbin Bw2 onto which the yarn Y is to be wound next to the winding bobbin Bw1.

At a time ta1 after the time ts2, the yarn supply package Ps1 attached to the first attachment unit 22 becomes empty. Therefore the time ta1 is the unwinding end time at which unwinding of the yarn Y from the yarn supply package Ps1 ends. At the same time as the yarn supply package Ps1 becomes empty, at a time tb1 (= the time ta1), the node K formed by joining the yarn Y in the yarn supply package Ps1 with the yarn Y in the yarn supply package Ps2 is pulled toward the winding device 19 side. As a result, unwinding of the yarn Y from the yarn supply package Ps2 attached to the second attachment unit 23 starts. Therefore the time tb1 is the unwinding start time at which the yarn Y is unwound from the yarn supply package Ps2 for the first time starts (i.e., unwinding of the yarn Y from the yarn supply package Ps2 starts). At a time te2, the winding process of winding the yarn Y onto the winding bobbin Bw2 ends (formation of the wound package Pw2 finishes) and a winding process of winding the yarn Y onto a winding bobbin Bw3 starts at a time ts3. At a time te3, the winding process of winding the yarn Y onto the winding bobbin Bw3 ends (formation of the wound package Pw3 finishes).

At a time ta2 which is after the time ta1 and before the yarn supply package Ps2 becomes empty, detachment of the yarn supply package Ps1 from the first attachment unit 22 and attachment of a yarn supply package Ps3 to the first attachment unit 22 are performed by, for example, the operator. The remaining weight of the yarn supply package Ps3 at this stage is WF. Thereafter, at an appropriate timing, a terminal portion of the yarn Y in the yarn supply package Ps2 is joined with a start end portion of the yarn Y in the yarn supply package Ps3 by the operator so that a node K is formed. The operator may manually join the end portions. Alternatively, the operator may join the end portions by operating an unillustrated portable joining device, for example.

The other matters will be briefly explained. Matters related to the winding unit 4 are as follows. From a time ts4 to a time te4, the yarn Y is wound onto a winding bobbin Bw4 (a wound package Pw4 is formed). From a time ts5 to a time te5, the yarn Y is wound onto a winding bobbin Bw5 (a wound package Pw5 is formed). From a time ts6 to a time te6, the yarn Y is wound onto a winding bobbin Bw6 (a wound package Pw6 is formed). Matters related to the yarn supplying unit 2 are as follows. At a time tb2 (= the time ta3) between the time ts4 and the time te4, the yarn supply package Ps2 becomes empty and unwinding of the yarn Y from the yarn supply package Ps3 starts. Thereafter, at a time tb3, the yarn supply package Ps2 is replaced with a yarn supply package Ps4. At a time ta4 (= the time tb4) between the time ts6 and the time te6, the yarn supply package Ps3 becomes empty and unwinding of the yarn Y from the yarn supply package Ps4 starts.

(Basic Information of Yarn Supply Package)

Based on the background knowledge described above, to begin with, basic information of a yarn supply package Ps which is obtained by the information management unit 110 will be described. As the basic information of a yarn supply package Ps, for example, the information management unit 110 acquires initial amount information, unwinding unit amount information, and accumulative unwinding time information of each yarn supply package Ps. These sets of information can be used for acquiring management information (detailed later) of each yarn supply package Ps.

The initial amount information is information related to an initial amount (initial weight or initial length) of a yarn Y in a yarn supply package Ps before unwinding of the yarn Y starts. The initial amount information is, for example, set in advance in the machine controller 5 as information in common between all yarn supply packages Ps of all spindles 9 of a single false-twist texturing machine 1. As more specific information, in the present embodiment, information of the above-described initial weight (i.e., WF) and information of fineness (i.e., weight per unit length) of the yarn Y are stored in the machine controller 5 as the initial amount information. The unit of the weight of the yarn supply package Ps is, for example, kilogram. The fineness of the yarn Y is represented as F. The unit of the fineness is, for example, dtex (decitex). Decitex indicates the weight (gram) of the yarn Y per 10000 meters.

The unwinding unit amount information is information regarding the amount of a yarn Y unwound from a yarn supply package Ps per unit time. The unwinding unit amount information is, for example, information of the above-described unwinding speed Vu. In the present embodiment, for the sake of convenience, the unwinding speed Vu is substantially constant during a winding process. The unit of the unwinding speed is, for example, meter per minute. The unwinding unit amount information is, for example, set in advance in the machine controller 5 as information in common between all of all spindles 9 of a single false-twist texturing machine 1. The machine controller 5 obtains information of the unwinding speed Vu based on, for example, the information of a set value of the rotation number of the first feed rollers 11.

The accumulative unwinding time information is information regarding the total time of unwinding of a yarn Y from a yarn supply package Ps (accumulative unwinding time). For the sake of convenience, the accumulative unwinding time of a yarn supply package Ps from which a yarn Y is unwound is represented as tinU. The accumulative unwinding time information is obtained in the following manner. During the winding process, the machine controller 5 determines whether yarn supply package switching with which the yarn supply package Ps supplying the yarn Y is switched has occurred, based on a detection result of the yarn detection sensor 24. For example, in FIG. 4(a) and FIG. 4(b), the yarn supply package switching is a matter in which unwinding of the yarn Y from the yarn supply package Ps1 ends (end of unwinding) and unwinding of the yarn Y from the yarn supply package Ps2 starts. When the state of the yarn detection sensor 24 is switched from a state in which the yarn Y is detected by one of the first detection unit 25 and the second detection unit 26 to a state in which the yarn Y is detected by the other of the first detection unit 25 and the second detection unit 26, the machine controller 5 determines that the yarn supply package switching has occurred. When the machine controller 5 determines that the yarn supply package switching has occurred, the machine controller 5 sets tinU at a predetermined initial time (reset process). The initial time is zero, for example. The machine controller 5 may obtain the unwinding start time (i.e., the time ta1) at which the unwinding of the yarn Y from the yarn supply package Ps2 starts and store the obtained information.

Thereafter, the machine controller 5 increases tinU over time (updates tinU) while the yarn Y is being unwound from the yarn supply package Ps2. When, the unwinding of the yarn Y from the yarn supply package Ps2 is temporarily stopped due to, for example, yarn breakage, the machine controller 5 temporarily stops the update of tinU. In this way, the machine controller 5 obtains only the time (detection time) during which the unwinding of the yarn Y from the yarn supply package Ps2 is detected by the yarn detection sensor 24, as the accumulative unwinding time (tinU). Likewise, when the unwinding of the yarn Y from the yarn supply package Ps2 ends and when unwinding of the yarn Y from the yarn supply package Ps3 starts, the machine controller 5 executes the above-described reset process (i.e., sets tinU at the initial time) based on a detection result of the yarn detection sensor 24. Thereafter, as the machine controller 5 updates tinU over time, the information of the accumulative unwinding time of unwinding of the yarn Y from the yarn supply package Ps3 is obtained. In this way, when the yarn Y is being unwound from a yarn supply package Ps, the machine controller 5 is able to obtain the accumulative unwinding time information of that yarn supply package Ps.

As described above, the information management unit 110 obtains the initial amount information, the unwinding unit amount information, and the accumulative unwinding time information as the basic information of the yarn supply package Ps.

(Information Regarding Replacement and Joining of Yarn Supply Package)

As an explanation related to the above-described yarn supply package switching, the following will explain information obtained by the information management unit 110 when an empty yarn supply package Ps is replaced with a new yarn supply package during the winding process. When a yarn supply package Ps attached to one of the package attachment units 21 is empty, the operator detaches the empty yarn supply package Ps from the one of the package attachment units 21 and attaches a new yarn supply package Ps to the one of the package attachment units 21. Thereafter, the operator joins the start end portion of the yarn Y in the new yarn supply package Ps with the terminal portion of the yarn Y in the yarn supply package Ps attached to the other package attachment unit 21, so as to form a node K. Subsequently, the operator provides the node K at a predetermined position. Furthermore, the operator inputs, to the machine controller 5, information indicating that the node K is provided at the predetermined position (for the sake of convenience, this information will be referred to as provision information). When such an input is made, the machine controller 5 stores the provision information. Thereafter, when the yarn supply package switching occurs, the machine controller 5 performs the above-described reset process and stores information indicating that the node K has been moved away from the predetermined position (for the sake of convenience, this information will be referred to as movement information).

(Setting of Yarn Supply Information Reference Time)

The information management unit 110 is configured to be able to set a yarn supply information reference time that is a reference used when management information of a yarn supply package Ps is obtained. In the present embodiment, the yarn supply information reference time indicates a time (timing) at which the information management unit 110 obtains the management information of a yarn supply package Ps. For example, the information management unit 110 stores plural options regarding the setting of the yarn supply information reference time. Based on a setting selected from plural options by an input to the machine input unit 5a, the information management unit 110 determines whether the yarn supply information reference time has come. The options include, for example, "always", "by predetermined operation", and "reservation". When the "always" is selected, the information management unit 110 determines that the yarn supply information reference time has come each time a predetermined first time elapses. The information management unit 110 may store the first time in a non-changeable manner. Alternatively, the information management unit 110 may be able to newly set and/or rewrite the first time in accordance with an input to the machine input unit 5a by the operator. When the "by predetermined operation" is selected, the information management unit 110 determines that the yarn supply information reference time has come when a predetermined operation is performed for the machine input unit 5a. In this case, for example, a time at which the predetermined operation is performed is the yarn supply information reference time. When the "reservation" is selected, the information management unit 110 determines that the yarn supply information reference time has come when a first reservation time set by the operator through the machine input unit 5a has come. The first reservation time is a time later than a time at which the operator performs an input. The information management unit 110 is arranged to be able to re-select (change) the setting regarding the yarn supply information reference time in accordance with an input to the machine input unit 5a by the operator. The information regarding the setting of the yarn supply information reference time is equivalent to yarn supply setting information of the present invention.

(Method of Obtaining Management Information of Yarn Supply Package)

The following will describe an example of a method of how the information management unit 110 obtains the management information of a yarn supply package Ps. In the present embodiment, the management information of a yarn supply package Ps includes information of a remaining amount. The remaining amount is, for example, an estimated value of an amount (weight in a strict sense) of the yarn Y in a yarn supply package Ps from which the yarn Y is being unwound at the above-described yarn supply information reference time. When the remaining amount (remaining weight) is Wr, this Wr can be calculate by, for example, an equation shown below by utilizing tinU at the yarn supply information reference time. In the equation, A is a coefficient for representing a result of calculation in parentheses in units of kilogram.

The information management unit 110 is configured to estimate the remaining amount of a yarn supply package Ps from which the yarn Y is being unwound in each of the spindle 9 in each of the false-twist texturing machines 1. For the sake of convenience, the remaining amount in a single spindle 9 will be referred to as an individual remaining amount.

$$Wr=WF-(A\times Vu\times F\times tinU)$$

The information management unit 110 may calculate an estimated length of time (remaining time) that is required to end the unwinding of the yarn Y from the yarn supply package Ps from which the yarn Y is being unwound at the yarn supply information reference time. When the remaining time regarding the yarn supply package Ps from which the yarn Y is being unwound at the yarn supply information reference time is tR, the value of tR can be calculated by one of the following two equations, for example. The information management unit 110 may calculate the remaining time by using the lower one of the two equations and then calculate the remaining amount by utilizing the information of the remaining time.

$$tR=WR/(A\times Vu\times F)$$

$$tR=\{WF-(A\times Vu\times F\times tinU)\}/(A\times Vu\times F)$$

(Basic Information of Wound Package)

The following will describe the basic information of a wound package Pw obtained by the information management unit 110. As the basic information of each wound package Pw, the information management unit 110 obtains information of the thickness of a yarn Y processed and wound onto the winding bobbin Bw, winding speed information, and accumulative winding time information. These sets of information can be used for acquiring management information (detailed later) of each wound package Pw.

The thickness (weight per unit length) of a processed yarn Y is referred to as Fw for the sake of convenience. The unit of thickness is, for example, dtex that is the unit of fineness and indicates the weight (gram) of the yarn Y per 10000 meters. Fw is, for example, set in advance in the machine controller 5 as information in common between all wound packages Pw of all spindles 9 of a single false-twist texturing machine 1.

The winding speed information is information regarding the winding speed of a yarn Y wound onto the winding bobbin Bw (i.e., the length of a yarn Y wound onto a winding bobbin Bw per unit time). To put it differently, the winding speed information is information regarding the speed of formation of a wound package Pw. The unit of the winding speed is, for example, meter per minute. The winding speed information is, for example, set in advance in the machine controller 5 as information in common between all of all spindles 9 of a single false-twist texturing machine 1. The machine controller 5 obtains the information of the winding speed based on, for example, information of the set value of the rotation number of the winding roller 34. For the sake of convenience, the winding speed is termed Vw (see FIG. 3). In the present embodiment, for the sake of convenience, the winding speed Vw is substantially constant.

The accumulative winding time information is information regarding the total time of winding of the yarn Y onto the winding bobbin Bw (accumulative winding time). For the sake of convenience, the accumulative winding time regarding the winding bobbin Bw on which the yarn Y is wound is referred to as tinW. The accumulative winding time information is obtained in the following manner. When the winding process of winding a yarn Y onto a new empty winding bobbin Bw is performed, the machine controller 5 controls the automatic doffer 10 to attach the winding bobbin Bw to the winding device 19. For example, the machine controller 5 sets tinW at a predetermined initial time (e.g., zero) at the start of the control of the automatic doffer 10. Subsequently, the machine controller 5 performs yarn threading to the winding bobbin Bw attached to the winding device 19 by controlling the above-described yarn threading device (not illustrated). When the yarn threading by the yarn threading device is completed while the yarn feeler 41 detects the yarn Y, the machine controller 5 determines that the winding process has started, and starts to update tinW. In other words, after determining that the winding process has started, the machine controller 5 increases tinW over time (i.e., updates tinW). When a wound package Pw is being formed, the machine controller 5 is able to obtain accumulative winding time information of that wound package Pw .

When the accumulative winding time of a spindle 9 reaches a predetermined target winding time, the machine controller 5 determines that the formation of a wound package Pw is completed in that spindle 9. When determining that the formation of the wound package Pw is completed, the machine controller 5 controls the automatic doffer 10 to detach the wound package Pw from the winding device 19. The wound package Pw (completed package PwC) detached from the winding device 19 is temporarily stored in the stocker 10a (in-stock package PwS). The weight of the yarn Y in the in-stock package PwS is, for example, equal to predetermined target weight.

In this way, the information management unit 110 obtains the information of the thickness of the yarn, the winding speed information, and the accumulative winding time information, as the basic information of the wound package Pw.

(Setting of Winding Information Reference Time)

The information management unit 110 is configured to be able to set a winding information reference time that is a reference used when management information of a wound package Pw is obtained. In the present embodiment, the winding information reference time indicates a time (timing) at which the information management unit 110 obtains the management information of a wound package Pw. For example, the information management unit 110 stores plural options regarding the setting of the winding information reference time. Based on a setting selected from plural options by an input to the machine input unit 5a, the information management unit 110 determines whether the winding information reference time has come. The options include, for example, "always", "by predetermined operation", and "reservation". When the "always" is selected, the information management unit 110 determines that the winding information reference time has come each time a predetermined second elapses. The information management unit 110 may store the second time in a non-changeable manner. Alternatively, the information management unit 110 may be able to newly set and/or rewrite the second time in accordance with an input to the machine input unit 5a by the operator. The second time may be identical in length to the above-described first time or may be different from the first time. When the "by predetermined operation" is selected, the information management unit 110 determines that the winding information reference time has come when a predetermined operation is performed for the machine input unit 5a. In this case, for example, a time at which the predetermined operation is performed is the winding information reference time. When the "reservation" is selected, the information management unit 110 determines that the winding information reference time has come when a second reservation time set by the operator through the machine input unit 5a has come. The second reservation time is a time later than a time at which the operator performs an input. The second reservation time may be identical with the above-described first reservation time or may be different from the first reservation time. The information management unit 110 is arranged to be able to re-select (change) the setting regarding the winding information reference time in accordance with an input to the machine input unit 5a by the operator. The information regarding the setting of the winding information reference time is equivalent to winding setting information of the present invention.

The information management unit 110 may be arranged to be able to individually set the yarn supply information reference time and the winding information reference time. Alternatively, the information management unit 110 may be arranged to be able to set an information acquisition time that is treated as both the yarn supply information reference time and the winding information reference time.

(Method of Obtaining Management Information of Wound Package)

The following will describe an example of a method of how the information management unit 110 obtains the management information of a wound package Pw. In the present embodiment, the management information of a wound package Pw includes information of a wound amount. The wound amount is an amount (weight to be strict) of the yarn Y in the wound package Pw (in-production package PwM) being formed at the above-described winding information reference time. When the wound amount (wound weight) is Ww, this Ww can be calculated by, for example, an equation shown below by utilizing tinW at the winding information reference time. A is the above-described coefficient. For the sake of convenience, the wound amount related to one spindle 9 will be referred to as an individual wound amount.

$$Ww = A \times Vw \times Fw \times tinW$$

(Calculation and Output of Total Remaining Amount and Calculation and Output of Total Wound Amount)

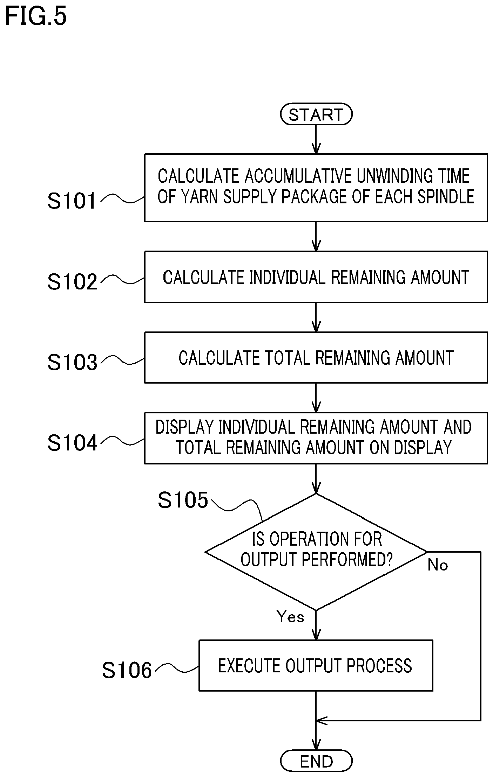

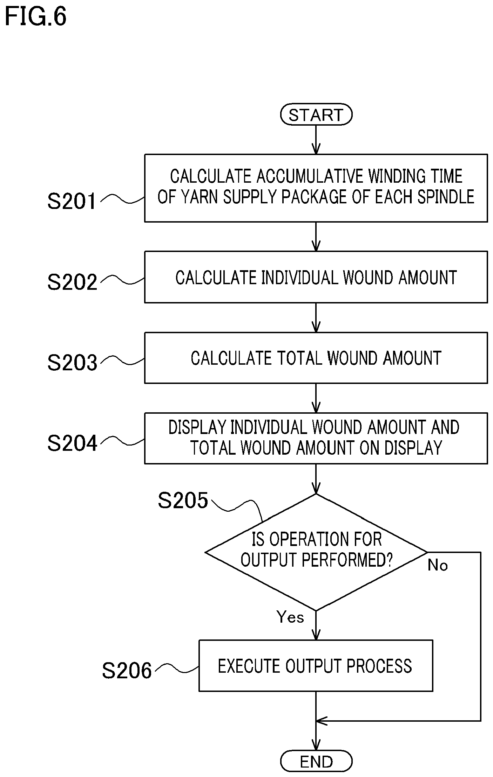

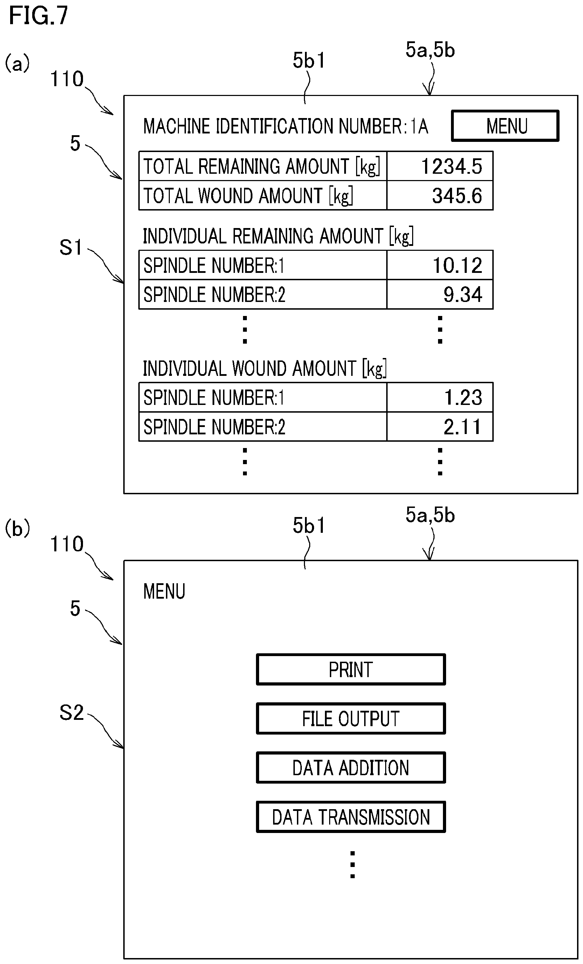

The following will describe a process of calculating and outputting a total remaining amount and a process of calculating and outputting a total wound amount with reference to FIG. 5 to FIG. 7(b) . FIG. 5 is a flowchart regarding calculation and output of the total remaining amount of yarns Y in unwinding-in-progress packages. FIG. 6 is a flowchart regarding calculation and output of the total wound amount of yarns Y in in-production packages PwM. FIG. 7(a) shows a screen S1 in which sets of information such as a total remaining amount and a total wound amount are displayed. FIG. 7(b) shows a screen S2 in which menus are displayed. For the sake of convenience, for example, the machine input unit 5a includes a touch panel provided to overlap a display 5b1. As a specific example, the following will describe a total remaining amount and a total wound amount in the false-twist texturing machine 1A (see FIG. 1). The following assumes that, in the information management unit 110, the machine controller 5 configured to control the false-twist texturing machine 1A performs the process described below. However, the disclosure is not limited to this. Another device constituting the information management unit 110 may perform the process described below.

A process of calculating and outputting the total remaining amount will be described. To begin with, the machine controller 5 calculates an accumulative unwinding time at the above-described yarn supply information reference time. That is to say, in regard to a yarn supply package Ps (i.e., an unwinding-in-progress package) attached to each yarn supply package retaining portion 20 of each spindle 9 of the false-twist texturing machine 1A and from which the yarn Y is being unwound, the machine controller 5 calculates the above-described accumulative unwinding time (S101). Subsequently, for each spindle 9, the machine controller 5 calculates the individual remaining amount (Wr) of the unwinding-in-progress package based on, for example, the above-described equation (S102). The information of the individual remaining amount regarding each spindle 9 is included in individual remaining amount inclusive information of the present invention. Hereinafter, for the sake of convenience, a process of obtaining the individual remaining amount inclusive information will be referred to as an individual remaining amount information acquisition process. The individual remaining amount at the yarn supply information reference time may be different between the spindles 9. This is because, for example, the spindles 9 may be different from one another in unwinding start time and the unwinding may be temporarily stopped due to yarn breakage or forcible yarn cutting in each spindle 9. The individual remaining amount inclusive information may be information of the individual remaining amount per se or information obtained by adding another value to the individual remaining amount.

Subsequently, the machine controller 5 calculates a total remaining amount which is obtained by adding up the individual remaining amounts of all spindles 9 in the false-twist texturing machine 1A (S103). The information of the total remaining amount is equivalent to total remaining amount inclusive information of the present invention. Hereinafter, for the sake of convenience, a process of obtaining the total remaining amount inclusive information will be referred to as a total remaining amount information acquisition process.

Each of the machine controllers 5 in the yarn processing facility 100 performs the individual remaining amount information acquisition process and/or the total remaining amount information acquisition process for the corresponding false-twist texturing machine 1. In other words, the information management unit 110 performs the individual remaining amount information acquisition process and/or the total remaining amount information acquisition process for each of the false-twist texturing machines 1. The information management unit 110 may perform the individual remaining amount information acquisition process and/or the total remaining amount information acquisition process for one or some of the false-twist texturing machines 1.

Subsequently, the machine controller 5 displays, on a display 5b1 of the machine output unit 5b, for example, a machine identification number assigned to the false-twist texturing machine 1A, information of the individual remaining amount of each spindle 9, and information of the calculated total remaining amount (S104; see the screen S1 in FIG. 7(a)). This allows the operator to understand the individual remaining amount and the total remaining amount of the unwinding-in-progress packages in the false-twist texturing machine 1A at a glance. The information of the machine identification number may not be displayed. Only one of the information of the individual remaining amount and the information of the total remaining amount may be displayed.

The machine controller 5 is configured to display, on the display 5b1, a menu to which the operator makes an input. As a simple example, when the operator touches a menu button (see FIG. 7 (a)) displayed on the screen S1, the machine controller 5 displays a menu screen (screen S2) on the display 5b1 based on an input to the machine input unit 5a (see FIG. 7(b)). The machine controller 5 determines whether a predetermined operation for output is performed for the machine input unit 5a by the operator (S105). When the operation for output is performed (Yes in S105), the machine controller 5 executes an output process in accordance with a result of input to the machine input unit 5a. When the operation for output is not performed (No in S105), the machine controller 5 ends the series of processes.

The output process includes, for example, the following process. When the operator touches the "print" button, the machine controller 5 controls the printer 5b2 to print the information of the individual remaining amount and/or the total remaining amount on a printing medium such as paper. When the operator touches the "file output" button, the machine controller 5 generates a known CSV file (electronic file of the present invention) including the information of the individual remaining amount and/or the total remaining amount. The machine controller 5 causes the machine storage unit 5c to store the file. In this case, the machine controller 5 functions as an output unit and a generation unit of the present invention. When the operator touches the "data addition" button, the machine controller 5 executes a process of adding, to an existing file, data including the information of the individual remaining amount and/or the total remaining amount. In this case, the machine controller 5 functions as the output unit of the present invention. When the operator touches the "data transmission" button, the machine controller 5 transmits, to another computer device, the data including the information of the individual remaining amount and/or the total remaining amount. In this case, the machine controller 5 functions as the output unit and a communication unit of the present invention. The data may be, for example, transmitted to a machine controller 5 controlling another false-twist texturing machine 1 (e.g., a false-twist texturing machine 1B) different from the false-twist texturing machine 1A. Alternatively, the data may be transmitted to the management device 101. Alternatively, the data may be transmitted to an external computer different from the information management unit 110. The external computer may be not only a typical PC but also an apparatus by which information can be viewed and/or processed, such as a host computer, a mobile phone, and a tablet terminal.

Hereinafter, for the sake of convenience, a process of outputting the individual remaining amount inclusive information will be referred to as an individual remaining amount information output process. Likewise, a process of outputting the total remaining amount inclusive information will be referred to as a total remaining amount information output process. The information management unit 110 may perform the individual remaining amount information output process and/or the total remaining amount information output process for a predetermined false-twist texturing machine group (yarn processor group of the present invention) including at least one of the false-twist texturing machines 1. The false-twist texturing machine group indicates a group of at least one false-twist texturing machine 1 provided in one room (or one building or one office, for example) among false-twist texturing machines 1 provided in at least one room (or at least one building or office).

A process of calculating and outputting the total wound amount will be described. To begin with, the machine controller 5 calculates an accumulative winding time at the above-described winding information reference time. That is to say, in regard to a wound package Pw (i.e., an in-production package PwM) attached to the winding device 19 of each spindle 9 of the false-twist texturing machine 1A and onto which the yarn Y is being wound, the machine controller 5 calculates the above-described accumulative winding time (S201). Subsequently, for each spindle 9, the machine controller 5 calculates the individual wound amount (Ww) of the in-production package PwM based on, for example, the above-described equation (S202). The information of the individual wound amount regarding each spindle 9 is included in individual wound amount inclusive information of the present invention. Hereinafter, for the sake of convenience, a process of obtaining the individual wound amount inclusive information will be referred to as an individual wound amount information acquisition process. The individual wound amount at the winding information reference time may be different between the spindles 9. This is because, for example, the spindles 9 may be different from one another in winding start time and the winding may be temporarily stopped due to yarn breakage or forcible yarn cutting in each spindle 9.

Subsequently, the machine controller 5 calculates a total wound amount which is obtained by adding up the individual wound amounts of all spindles 9 in the false-twist texturing machine 1A (S203). The information of the total wound amount is equivalent to the total wound amount inclusive information of the present invention. Hereinafter, for the sake of convenience, a process of obtaining the total wound amount inclusive information will be referred to as a total wound amount information acquisition process.

Each of the machine controllers 5 in the yarn processing facility 100 performs the individual wound amount information acquisition process and the total wound amount information acquisition process for the corresponding false-twist texturing machine 1. In other words, the information management unit 110 performs the individual wound amount information acquisition process for each of the false-twist texturing machines 1. Alternatively, the information management unit 110 may perform the individual wound amount information acquisition process and the total wound amount information acquisition process for at least one of the false-twist texturing machines 1.

Subsequently, the machine controller 5 displays, on the display 5b1 of the machine output unit 5b, for example, the machine identification number assigned to the false-twist texturing machine 1A, information of the individual wound amount of each spindle 9, and information of the calculated total wound amount (S204; see the screen S1 in FIG. 7(a)). This allows the operator to understand the total wound amount of the in-production packages PwM in the false-twist texturing machine 1A at a glance. The information of the machine identification number may not be displayed. Only one of the information of the individual wound amount and the information of the total wound amount may be displayed.

As shown in FIG. 7(a), the machine controller 5 may simultaneously display the information of the total remaining amount and the information of the total wound amount on the display 5b1. The machine controller 5 may be able to switch the display mode between a mode in which the information of the total remaining amount is displayed on the display 5b1 and a mode in which the total wound amount is displayed on the display 5b1.

The machine controller 5 is configured to display, on the display 5b1, a menu to which the operator makes an input. As a simple example, when the operator touches a menu button (see FIG. 7 (a)) displayed on the screen S1, the machine controller 5 displays a menu screen (screen S2) on the display 5b1 based on an input to the machine input unit 5a (see FIG. 7(b)). The machine controller 5 determines whether a predetermined operation for output is performed for the machine input unit 5a by the operator (S205). When the operation for output is performed (Yes in S205), the machine controller 5 executes an output process in accordance with a result of input to the machine input unit 5a. When the operation for output is not performed (No in S205), the machine controller 5 ends the series of processes.

The output process includes, for example, the following process. When the operator touches the "print" button, the machine controller 5 controls the printer 5b2 to print the information of the individual wound amount and/or the total wound amount on a printing medium such as paper. When the operator touches the "file output" button, the machine controller 5 generates a known CSV file (electronic file of the present invention) including the information of the individual wound amount and/or the total wound amount. The machine controller 5 causes the machine storage unit 5c to store the file. In this case, the machine controller 5 functions as an output unit and a generation unit of the present invention. When the operator touches the "data addition" button, the machine controller 5 executes a process of adding, to an existing file, data including the information of the individual wound amount and/or the total wound amount. In this case, the machine controller 5 functions as the output unit of the present invention. When the operator touches the "data transmission" button, the machine controller 5 transmits, to another computer device, the data including the information of the individual wound amount and/or the total wound amount. In this case, the machine controller 5 functions as the output unit and a communication unit of the present invention. The data may be, for example, transmitted to a machine controller 5 controlling another false-twist texturing machine 1 (e.g., a false-twist texturing machine 1B) different from the false-twist texturing machine 1A. Alternatively, the data may be transmitted to the management device 101. Alternatively, the data may be transmitted to an external computer different from the information management unit 110. The external computer may be not only a typical PC but also an apparatus by which information can be viewed and/or processed, such as a host computer, a mobile phone, and a tablet terminal.

Hereinafter, for the sake of convenience, a process of obtaining the individual wound amount inclusive information will be referred to as an individual wound amount information output process. Likewise, a process of outputting the total wound amount inclusive information will be referred to as a total wound amount information output process. The information management unit 110 may perform the individual wound amount information output process and/or the total wound amount information output process for the above-described false-twist texturing machine group.

In the output process, the machine controller 5 may output all of the individual remaining amount inclusive information, the individual wound amount inclusive information, the total remaining amount inclusive information, and the total wound amount inclusive information. Alternatively, in the output process, the machine controller 5 may output at least one of the individual remaining amount inclusive information, the individual wound amount inclusive information, the total remaining amount inclusive information, and the total wound amount inclusive information.

The machine controller 5 may execute the steps S101 and S201 substantially simultaneously or at different timings. The machine controller 5 may execute the steps S102 and S202 substantially simultaneously or at different timings. The machine controller 5 may execute the steps S103 and S203 substantially simultaneously or at different timings.

The arrangement of the machine input unit 5a is not limited to the arrangement described above. The machine input unit 5a may include, for example, an unillustrated mouse. The machine controller 5 may be arranged to display a cursor (not illustrated) on the display 5b1 and move the cursor when the mouse is moved. The machine controller 5 may be arranged to perform a predetermined process when the cursor is on a predetermined button and the mouse is clicked. As a matter of course, the machine input unit 5a may include another means that allows the operator to suitably perform an input operation.

In the present embodiment, the yarn supply packages Ps (the unwinding-in-progress package and the reserve package) are attached to the respective yarn supply package retaining portions 20. On this account, in a more strict sense, the total remaining amount of the yarns Y in plural reserve packages should be known. The operator may calculate the total remaining amount of the yarns Y in the reserve packages by actually enumerating the number of the reserve packages in the false-twist texturing machine 1A and multiplying the enumerated number by WF.

In the present embodiment, it is necessary to know the total yarn amount in the completed packages PwC temporarily stored in the winding unit 4. As described above, based on a detection result of the in-stock package detection unit 42, the machine controller 5 acquires the information of the number of completed packages PwC (in-stock packages PwS) temporarily stored in the stocker 10a. The machine controller 5 calculates the total yarn amount of one or more in-stock package PwS by multiplying the number of in-stock packages PwS in the false-twist texturing machine 1A by a target weight.

As described above, the individual remaining amount inclusive information and/or the total remaining amount inclusive information is output by, for example, the machine output unit 5b. When at least part of the individual remaining amount inclusive information is output, the operator is able to understand the individual remaining amount of each of the unwinding-in-progress packages at a glance. The total remaining amount can be obtained by adding up the individual remaining amounts of the unwinding-in-progress packages based on the individual remaining amounts understood at a glance. Furthermore, in a case where the total remaining amount inclusive information is output, it is possible to know the total remaining amount in a short time. It is therefore possible to easily obtain the information of the individual remaining amount of the yarn Y in each of the unwinding-in-progress packages and/or the information of the total remaining amount of the packages, and to reduce the burden on the operator regarding the acquisition of the individual remaining amount and/or the total remaining amount. The burden on the operator is particularly reduced on account of the acquisition and output of the total remaining amount inclusive information.

The individual remaining amount information output process and/or the total remaining amount information output process is performed for a predetermined false-twist texturing machine group. This makes it possible to know at once the individual remaining amount inclusive information and/or the total remaining amount inclusive information of each room, each building, or each office in which plural false-twist texturing machines 1 are provided. This makes it possible to efficiently evaluate the inventory assets.

In the present embodiment, because the yarn supply packages Ps (the unwinding-in-progress package and the reserve package) are attached to the respective yarn supply package retaining portions 20, it is necessary to know the remaining amount of the yarn Y in the reserve package. The burden on the operator is reduced also in this case, because at least the information of the individual remaining amount of the unwinding-in-progress package and/or the information of the total remaining amount can be output.

Furthermore, the operator is able to know the individual remaining amount inclusive information and/or the total remaining amount inclusive information only by viewing the display 5b1.

Furthermore, the operator is able to know the individual remaining amount inclusive information and/or the total remaining amount inclusive information only by viewing the printed matter.

Furthermore, it is possible to obtain the individual remaining amount inclusive information and/or the total remaining amount inclusive information by opening the generated electronic file.

Furthermore, it is possible to obtain the individual remaining amount inclusive information and/or the total remaining amount inclusive information by operating the external computer.

The information management unit 110 is arranged to allow the operator to input the yarn supply setting information that is related to the setting of the yarn supply information reference time. This makes it possible to set the yarn supply information reference time in accordance with the operator's request.

The information management unit 110 is arranged to be able to set the yarn supply information reference time at any time including a future time, based on the yarn supply setting information. This makes it possible to obtain the individual remaining amount inclusive information and/or the total remaining amount inclusive information of any time.

The following will describe modifications of the above-described embodiment. The members identical with those in the embodiment above will be denoted by the same reference numerals and the explanations thereof are not repeated.

(1) In the embodiment above, the machine controller 5 displays, on the display 5b1, the individual remaining amount inclusive information, the individual wound amount inclusive information, the total remaining amount inclusive information, and the total wound amount inclusive information. Furthermore, the machine controller 5 controls the printer 5b2 to print, on a printing medium, the individual remaining amount inclusive information, the individual wound amount inclusive information, the total remaining amount inclusive information, and the total wound amount inclusive information. Furthermore, the machine controller 5 generates a CSV file (electronic file) including the individual remaining amount inclusive information, the individual wound amount inclusive information, the total remaining amount inclusive information, and/or the total wound amount inclusive information. Furthermore, the machine controller 5 adds, to an existing file, data including the individual remaining amount inclusive information, the individual wound amount inclusive information, the total remaining amount inclusive information, and/or the total wound amount inclusive information. Furthermore, the machine controller 5 transmits, to another computer device, data including the individual remaining amount inclusive information, the individual wound amount inclusive information, the total remaining amount inclusive information, and/or the total wound amount inclusive information. However, the disclosure is not limited to these arrangements. The machine controller 5 may not be arranged to perform all of these processes. In other words, the machine controller 5 may be arranged to perform at least one of the processes. Alternatively, the machine controller 5 may perform another output process for allowing the operator to obtain the individual remaining amount inclusive information, the individual wound amount inclusive information, the total remaining amount inclusive information, and/or the total wound amount inclusive information.

(2) In the embodiment above, the machine output unit 5b includes the display 5b1 and the printer 5b2. However, the disclosure is not limited to this. The machine output unit 5b may include, for example, only one of the display 5b1 and the printer 5b2. Alternatively, the machine controller 5 may not include the machine output unit 5b. The machine controller 5 may be temporarily connectable to an output device (not illustrated).

(3) In the embodiment above, the machine controller 5 obtains and outputs the information of the individual remaining amount as the individual remaining amount inclusive information. In addition to this, the machine controller 5 may be arranged, for example, to be able to obtain information of the remaining amount (remaining weight) of the yarn Y in the reserve package attached to each of the yarn supply package retaining portions 20 of the false-twist texturing machine 1A. To be more specific, the machine controller 5 may be arranged as described below, for example. The machine controller 5 may be arranged to, for example, allow the operator to input the information of the remaining amount (hereinafter, reserve remaining amount) of the yarn Y in the reserve package attached to each of the yarn supply package retaining portions 20 of the false-twist texturing machine 1A. The reserve remaining amount is, for example, represented by weight (in units of kilogram). For each spindle 9, the machine controller 5 may treat a value obtained by adding the reserve remaining amount to the individual remaining amount, as the individual remaining amount inclusive information. The information of the reserve remaining amount is equivalent to reserve remaining amount-related information of the present invention. The machine controller 5 may obtain the total remaining amount inclusive information based on such individual remaining amount inclusive information of the spindles 9. Alternatively, the machine controller 5 may obtain the total remaining amount inclusive information by adding the total of the reserve remaining amounts of the spindles 9 to the total remaining amount. Alternatively, the machine controller 5 may be arranged to, for example, allow the operator to input the information of the number of reserve packages attached to each of the yarn supply package retaining portions 20 of the false-twist texturing machine 1A. The machine controller 5 may calculate the total of the reserve remaining amounts by utilizing the information of the number of reserve packages. The operator is required to check the reserve remaining amount-related information and input it to the information management unit 110 (machine controller 5) in this case. However, it is possible to obtain the individual remaining amount inclusive information and/or the total remaining amount inclusive information, in which the reserve remaining amount-related information is taken into account. Therefore, the burden on the operator can be reduced to some degree.

(4) by using a means in addition to the means shown in the modification (3) or a means different from the means shown in the modification (3) above, the machine controller 5 may include the information of the remaining amount of the yarn Y in the reserve package of each spindle 9 in the individual remaining amount inclusive information. For example, the machine controller 5 may be arranged to determine whether a yarn supply package Ps is attached to a package attachment unit 21. In order to perform such determination, for example, the yarn supplying unit 2 may include plural unillustrated attachment sensors (attachment information acquisition unit of the present invention) which are configured to detect the presence of a yarn supply package Ps in each package attachment unit 21. The attachment sensors may be, for example, known optical sensors or known weight sensors. The machine controller 5 may obtain information (attachment information) indicating whether a reserve package is attached to each yarn supply package retaining portion 20, by utilizing results of detection by the attachment sensors. The machine controller 5 may obtain, for each spindle 9, the individual remaining amount inclusive information in which the reserve remaining amount-related information is taken into account, by obtaining the reserve remaining amount-related information of each spindle 9 based on the attachment information and adding the reserve remaining amount to the individual remaining amount. The machine controller 5 may obtain information of the number of reserve packages based on the attachment information and calculate the total of the reserve remaining amounts by multiplying the obtained number by WF. The machine controller 5 may include the information of the total of the reserve remaining amounts in the total remaining amount inclusive information. Alternatively, the attachment sensors may not be provided. For example, the machine controller 5 may allow the operator to input the attachment information. When a new yarn supply package Ps is attached to a yarn supply package retaining portion 20, the operator may input the attachment information of that yarn supply package retaining portion 20 to the machine controller 5. In this case, the machine controller 5 is equivalent to the attachment information acquisition unit of the present invention. The machine controller 5 may calculate the total of the reserve remaining amounts by obtaining information of the number of reserve packages by utilizing the attachment information input by the operator. The burden on the operator is significantly reduced when the attachment information is utilized.

(5) In the embodiment above, the machine controller 5 obtains and outputs the information of the individual wound amount as the individual wound amount inclusive information. However, the disclosure is not limited to this. The machine controller 5 may, for example, deal with a value obtained by adding, to the individual wound amount, the total amount (hereinafter, temporally-stored total amount) of the yarn in one or more in-stock package PwS temporarily stored in the stocker 10a of each spindle 9. To put it differently, the machine controller 5 may include the information of the temporally-stored total amount in the individual wound amount inclusive information. In this case, the information of the temporally-stored total amount is equivalent to stored total amount-related information of the present invention. The machine controller 5 may obtain the total wound amount inclusive information by using such individual wound amount inclusive information. Alternatively, the machine controller 5 may obtain the total wound amount inclusive information by adding a value, which is calculated by adding up the temporally-stored total amounts of plural spindles 9, to the total wound amount. The burden on the operator is significantly reduced by this arrangement.

(6) In the embodiment above, the in-stock package detection unit 42 is provided to correspond to each winding device 19. However, the disclosure is not limited to this. The in-stock package detection unit 42 may not be provided. In this case, the machine controller 5 may include the information of the temporally-stored total amount obtained by a below-described method in the individual wound amount inclusive information. For example, the machine controller 5 may allow the operator to input the information of the temporally-stored total amount. In this case, the information of the temporally-stored total amount is equivalent to stored total amount-related information of the present invention. Alternatively, for example, the machine controller 5 may allow the operator to input information of the number of in-stock packages PwS. The machine controller 5 calculates the total of the temporally-stored total amounts of plural spindles 9 by multiplying the number of in-stock packages PwS by the above-described target weight. According to this arrangement, the operator is required to check the stored total amount-related information and input it to the information management unit 110 (machine controller 5) in this case. However, it is possible to obtain the individual wound amount inclusive information and/or the total wound amount inclusive information, in which the stored total amount-related information is taken into account. Therefore, the burden on the operator can be reduced to some degree.

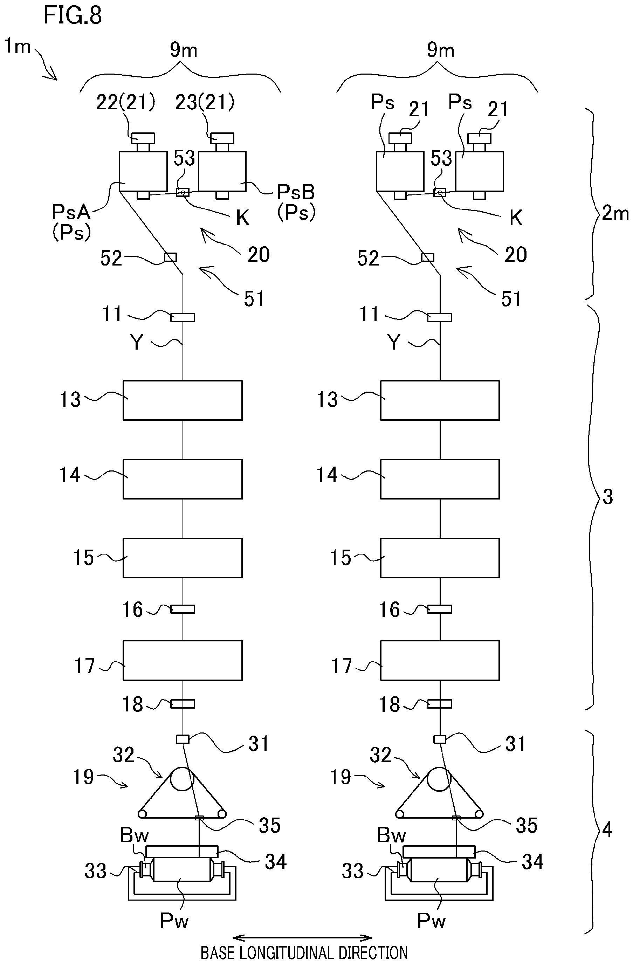

(7) In the embodiment above, whether the yarn supply package switching has occurred is determined based on a detection result of the yarn detection sensor 24 including the first detection unit 25 and the second detection unit 26. However, the disclosure is not limited to this. For example, as shown in FIG. 8, a yarn supplying unit 2m of a false-twist texturing machine 1m may include, in each spindle 9m, a switching detector 51 that is structurally different from the yarn detection sensor 24. The switching detector 51 may include, for example, a supply sensor 52 and a node sensor 53. The supply sensor 52 is configured to be able to detect whether the yarn Y is being supplied from the first attachment unit 22. The node sensor 53 is configured to be able to detect a node K that is stationarily provided at a predetermined position. According to this arrangement, when the node K is moved from the predetermined position and the node K is no longer detected by the node sensor 53, it is determined that the yarn supply package switching has occurred. From which one of the attachment units, the first attachment unit 22 and the second attachment unit 23, the yarn Y is being supplied at the time of the yarn supply package switching can be known based on a detection result of the supply sensor 52. In this way, even when a result of detection of the node K is used, it is possible to reliably know from which one of the attachment units, the first attachment unit 22 and the second attachment unit 23, the yarn Y is being supplied. The node sensor 53 may be arranged to be able to detect a moving node K.

(8) According to the embodiment above, the replacement of the yarn supply package Ps is performed by the operator. However, the disclosure is not limited to this. The replacement of the yarn supply package Ps may be performed by an unillustrated creel robot. In addition to the above, the collection of the wound package Pw is performed by the operator. However, the disclosure is not limited to this. The collection of the wound package Pw may be performed by an unillustrated wound package conveyance device.

(9) According to the embodiment above, the information management unit 110 may obtain the information of the initial weight of the yarn Y in the yarn supply package Ps, as the initial amount information. However, the disclosure is not limited to this. For example, as the initial amount information, the information management unit 110 may obtain information of the initial length of the yarn Y in the yarn supply package Ps. The information management unit 110 may obtain the information of the remaining weight by utilizing the information of the initial length and the information of the fineness.

(10) In the embodiment above, the information management unit 110 obtains both the individual remaining amount inclusive information and the individual wound amount inclusive information. However, the disclosure is not limited to this. The information management unit 110 may obtain only one of the individual remaining amount inclusive information and the individual wound amount inclusive information.

(11) In the embodiment above, the information management unit 110 obtains the total remaining amount inclusive information by utilizing the individual remaining amount inclusive information and obtains the total wound amount inclusive information by utilizing the individual wound amount inclusive information. However, the disclosure is not limited to this. The information management unit 110 may store a program by which the total remaining amount is directly calculated based on the above-described basic information without utilizing the individual remaining amount inclusive information. In this case, the information management unit is able to obtain the total remaining amount inclusive information without obtaining the individual remaining amount inclusive information. The information management unit 110 may store a program by which the total wound amount is directly calculated based on the above-described basic information without utilizing the individual wound amount inclusive information. In this case, the information management unit is able to obtain the total wound amount inclusive information without obtaining the individual wound amount inclusive information.

(12) In the embodiment above, the yarn supply information reference time indicates a timing at which the information management unit 110 executes a process of obtaining the management information of the yarn supply package Ps. Furthermore, the winding information reference time indicates a timing at which the information management unit 110 obtains the management information of the wound package Pw. In addition to them or in place of them, the information management unit 110 may be arranged as follows. For example, the information management unit 110 may be arranged to be able to store the management information of the yarn supply package Ps and the management information of the wound package Pw at a given past time, or may be able to obtain these sets of information by calculation. In accordance with an input from the operator, the information management unit 110 may be able to obtain at least one of the individual remaining amount inclusive information, the individual wound amount inclusive information, the total remaining amount inclusive information, and the total wound amount inclusive information at a given past time. In this case, the past time input (specified) by the operator is included in the yarn supply information reference time and/or the winding information reference time of the present invention. The yarn supply package Ps from which the yarn Y is being unwound at this yarn supply information reference time is encompassed in the unwinding-in-progress package of the present invention. The wound package Pw which is being formed at the winding information reference time is encompassed in the in-production package of the present invention.

(13) According to the embodiment above, the information management unit 110 is able to select the settings of the yarn supply information reference time and the winding information reference time from plural options, in accordance with an input from the operator. However, the disclosure is not limited to this. The information management unit 110 may not have the options regarding the settings. For example, the information management unit 110 may be arranged to always obtain the management information of the yarn supply package Ps and/or the management information of the wound package Pw. Alternatively, the information management unit 110 may be arranged to obtain these sets of information only when a predetermined operation is performed. Alternatively, the information management unit 110 may be arranged to obtain these sets of information related to only a reserved future time or a specified past time.

(14) While in the embodiment above the information management unit 110 obtains the information of the unwinding speed Vu based on the information of the rotation number of the first feed rollers 11, the disclosure is not limited to this arrangement. As another example, the machine controller 5 may store information of the rotation number of the second feed rollers 16 and information of the ratio between the rotation number of the first feed rollers 11 and the rotation number of the second feed rollers 16. The information management unit 110 may obtain the information of the unwinding speed based on these sets of information. Alternatively, as the unwinding unit amount information, the information management unit 110 may obtain information of the weight of the yarn Y unwound from the yarn supply package Ps per unit time, in place of the information of the unwinding speed. Such information may be input to the machine controller 5 in advance by the operator, for example.

(15) While in the embodiment above the information management unit 110 includes the machine controllers 5 and the management device 101, the disclosure is not limited to this arrangement. The information management unit 110 may include a computer device (not illustrated) that is neither the machine controller 5 nor the management device 101. Alternatively, the information management unit 110 may include only the machine controller 5 or the management device 101. To put it differently, only one of the machine controller 5 and the management device 101 may obtain the necessary information.

(16) In the embodiment above, the information management unit 110 stores the initial amount information which is in common between all yarn supply packages Ps in advance. However, the disclosure is not limited to this. The information management unit 110 may store the individual information of a yarn supply package Ps in association with the initial amount information of that yarn supply package Ps. In this case, the initial amounts of the yarn supply packages Ps may be different.

(17) In the embodiment above, each of the yarn supply package retaining portions 20 is able to retain two yarn supply packages Ps. However, the disclosure is not limited to this. Each of the yarn supply package retaining portions 20 may be able to retain three or more yarn supply packages Ps.

Alternatively, each of the yarn supply package retaining portions 20 may be able to retain only one yarn supply package Ps. To put it differently, the yarn supplying unit 2 may not be able to supply the yarn Y in an uninterrupted manner.

(18) In the embodiment above, in the winding unit 4, the automatic doffer 10 and the stocker 10a are provided to correspond to each winding device 19. However, the disclosure is not limited to this. The automatic doffer 10 may not be provided. The winding unit 4 may be, for example, arranged so that a completed wound package Pw is detached from the winding device 19 and collected by the operator.

(19) While in the embodiment above the yarn processing facility 100 includes plural false-twist texturing machines 1, the disclosure is not limited to this arrangement. The yarn processing facility 100 may include only one false-twist texturing machine 1. In addition to this, the management device 101 may not be provided. In this case, the false-twist texturing machine 1 is equivalent to the yarn processing facility of the present invention.

(20) The present invention may be applied not to the yarn processing facility 100 including the false-twist texturing machine 1 but to another yarn processing facility including a yarn processor. For example, the present invention may be applied to a yarn processing facility including an air texturing machine (yarn processor) recited in Japanese Laid-Open Patent Publication No. 2002-088605.

**Claims**

1. A yarn processing facility (100) comprising:

   a yarn processor (1) which includes processing spindles (9) each of which is able to form a wound package (Pw) by processing a yarn (Y) unwound from a yarn supply package (Ps) and winding the yarn (Y) onto a winding bobbin (Bw) ;
   an information management unit (110) which is configured to be able to manage information regarding the yarn processor (1); and

an output unit (5, 5b) which is configured to be able to output the information,

for each of the processing spindles (9), the information management unit (110) executing an individual remaining amount information acquisition process of acquiring, as the information, individual remaining amount inclusive information that takes into account of an individual remaining amount indicating a remaining amount at a predetermined yarn supply information reference time of a yarn (Y) in an unwinding-in-progress package (PsA) either from which, as the yarn supply package (Ps), the yarn (Y) is being unwound at the yarn supply information reference time or from which the yarn (Y) was unwound at the yarn supply information reference time and/or a total remaining amount information acquisition process of acquiring, as the information, total remaining amount inclusive information that takes into account of a total remaining amount obtained by adding up the individual remaining amounts of the respective processing spindles (9), and

the information management unit (110) executing an individual remaining amount information output process of causing the output unit (5, 5b) to output the individual remaining amount inclusive information of each of the processing spindles (9) obtained in the individual remaining amount information acquisition process to be acquired by an operator and/or a total remaining amount information output process of causing the output unit (5, 5b) to output the total remaining amount inclusive information obtained in the total wound amount information acquisition process to be acquired by the operator.

2. The yarn processing facility (100) according to claim 1, wherein, the information management unit (110) executes the total remaining amount information acquisition process and the total remaining amount information output process.

3. The yarn processing facility (100) according to claim 1 or 2, further comprising at least one yarn processor (1) each of which is identical with the yarn processor (1),

the information management unit (110) executing the individual remaining amount information acquisition process and/or the total remaining amount information acquisition process for each of at least one of the yarn processors (1), and

the information management unit (110) executing the individual remaining amount information output process and/or the total remaining amount information output process for a yarn processor group including the at least one of the yarn processors (1).

4. The yarn processing facility (100) according to any one of claims 1 to 3, wherein,

each of the processing spindles (9) includes a yarn supply package retaining portion (20) which is arranged to be able to retain the unwinding-in-progress package (PsA) and a reserve package (PsB) different from the unwinding-in-progress package (PsA), and

each of the processing spindles (9) is arranged to be able to uninterruptedly supply the yarn (Y) when a terminal portion of the yarn (Y) in the unwinding-in-progress package (PsA) is connected to a start end portion of the yarn (Y) in the reserve package (PsB).

5. The yarn processing facility (100) according to claim 4, wherein,

the information management unit (110) is arranged to allow the operator to input reserve remaining amount-related information which is related to a reserve remaining amount indicating the remaining amount of the yarn (Y) in the reserve package (PsB) retained by the yarn supply package retaining portion (20), and

for each of the processing spindles (9), the information management unit (110) is capable of obtaining the individual remaining amount inclusive information with the reserve remaining amount-related information being taken into account.

6. The yarn processing facility (100) according to claim 4 or 5, wherein,

each of the processing spindles (9) includes an attachment information acquisition unit (5) which is configured to be able to acquire attachment information that is information indicating whether the reserve package (PsB) is attached to the yarn supply package retaining portion (20), and

for each of the processing spindles (9), based on the attachment information, the information management unit (110) is capable of obtaining the individual remaining amount inclusive information with the reserve remaining amount-related information being taken into account, the reserve remaining amount-related information being related to the reserve remaining amount that is the remaining amount of the yarn (Y) in the reserve package (PsB).

7. The yarn processing facility (100) according to any one of claims 1 to 6, wherein, the output unit (5, 5b) includes a display (5b1) which is capable of displaying at least part of the individual remaining amount inclusive information and/or the total remaining amount inclusive information.

8. A yarn winder 1 comprising:
The yarn processing facility (100) according to any one of claims 1 to 7, wherein, the output unit (5, 5b) includes a printer (5b2) which is capable of printing, on a printing medium, at least part of the individual remaining amount inclusive information and/or the total remaining amount inclusive information.

9. The false-twist texturing machine (1, 101) according to claim 8, wherein,
The yarn processing facility (100) according to any one of claims 1 to 8, wherein, the output unit (5) includes a generation unit (5) which is capable of generating an electronic file including at least part of the individual remaining amount inclusive information and/or the total remaining amount inclusive information.

10. The yarn processing facility (100) according to any one of claims 1 to 9, wherein, the output unit (5) includes a communication unit (5) which is capable of transmitting, to an external computer outside the information management unit, at least part of the individual remaining amount inclusive information and/or the total remaining amount inclusive information.

11. The yarn processing facility (100) according to any one of claims 1 to 10, wherein, the information management unit (110) allows the operator to input, as the information, yarn supply setting information related to setting of the yarn supply information reference time.

12. The yarn processing facility (100) according to claim 11, wherein, the information management unit (110) is capable of setting the yarn supply information reference time at any time including a past time and a future time, based on the yarn supply setting information.

FIG.1

100

YARN PROCESSING FACILITY

110

1

FALSE-TWIST TEXTURING MACHINE

MANAGEMENT DEVICE

MACHINE CONTROLLER — 5

101a — MANAGEMENT INPUT UNIT

MACHINE INPUT UNIT — 5a

101b — MANAGEMENT OUTPUT UNIT

MACHINE OUTPUT UNIT — 5b

DISPLAY — 5b1

PRINTER — 5b2

101c — MANAGEMENT STORAGE UNIT

MACHINE STORAGE UNIT — 5c

101

1 — MACHINE CONTROLLER — 5

INFORMATION MANAGEMENT UNIT

FIG.2

UP-DOWN DIRECTION

BASE WIDTH DIRECTION

⊙
BASE LONGITUDINAL DIRECTION

| INFORMATION MANAGEMENT UNIT | MANAGEMENT DEVICE | MACHINE CONTROLLER |

110    101    5

FIG.3

BASE LONGITUDINAL DIRECTION

## FIG.4

(a) RELATIONSHIP BETWEEN REMAINING AMOUNT OF YARN IN YARN SUPPLY PACKAGE ATTACHED TO FIRST ATTACHMENT UNIT AND TIME

(b) RELATIONSHIP BETWEEN REMAINING AMOUNT OF YARN IN YARN SUPPLY PACKAGE ATTACHED TO SECOND ATTACHMENT UNIT AND TIME

(c) RELATIONSHIP BETWEEN WOUND AMOUNT OF YARN ON WINDING BOBBIN AND TIME

EP 4 246 254 A1

# FIG.5

```
                              ( START )
                                  │
                                  ▼
            ┌──────────────────────────────────────────────┐
S101        │ CALCULATE ACCUMULATIVE UNWINDING TIME         │
            │ OF YARN SUPPLY PACKAGE OF EACH SPINDLE        │
            └──────────────────────────────────────────────┘
                                  │
                                  ▼
            ┌──────────────────────────────────────────────┐
S102        │ CALCULATE INDIVIDUAL REMAINING AMOUNT         │
            └──────────────────────────────────────────────┘
                                  │
                                  ▼
            ┌──────────────────────────────────────────────┐
S103        │ CALCULATE TOTAL REMAINING AMOUNT             │
            └──────────────────────────────────────────────┘
                                  │
                                  ▼
            ┌──────────────────────────────────────────────┐
S104        │ DISPLAY INDIVIDUAL REMAINING AMOUNT AND       │
            │ TOTAL REMAINING AMOUNT ON DISPLAY             │
            └──────────────────────────────────────────────┘
                                  │
                                  ▼
S105                       IS OPERATION FOR            No
                           OUTPUT PERFORMED? ─────────────┐
                                  │                       │
                                 Yes                      │
                                  ▼                       │
            ┌──────────────────────────────────────────┐  │
S106        │ EXECUTE OUTPUT PROCESS                    │  │
            └──────────────────────────────────────────┘  │
                                  │                       │
                                  ▼◄──────────────────────┘
                              ( END )
```

## FIG.6

```
                    ( START )
                        │
                        ▼
            ┌───────────────────────────────┐
  S201 ~    │  CALCULATE ACCUMULATIVE WINDING TIME │
            │ OF YARN SUPPLY PACKAGE OF EACH SPINDLE │
            └───────────────────────────────┘
                        │
                        ▼
            ┌───────────────────────────────┐
  S202 ~    │   CALCULATE INDIVIDUAL WOUND AMOUNT  │
            └───────────────────────────────┘
                        │
                        ▼
            ┌───────────────────────────────┐
  S203 ~    │    CALCULATE TOTAL WOUND AMOUNT     │
            └───────────────────────────────┘
                        │
                        ▼
            ┌───────────────────────────────┐
  S204 ~    │ DISPLAY INDIVIDUAL WOUND AMOUNT AND │
            │   TOTAL WOUND AMOUNT ON DISPLAY    │
            └───────────────────────────────┘
                        │
                        ▼
  S205 ~            ◇ IS OPERATION FOR ◇
                    ◇ OUTPUT PERFORMED? ◇──── No ──┐
                        │                          │
                       Yes                         │
                        ▼                          │
            ┌───────────────────────────────┐      │
  S206 ~    │      EXECUTE OUTPUT PROCESS        │      │
            └───────────────────────────────┘      │
                        │◄─────────────────────────┘
                        ▼
                    ( END )
```

# FIG.7

(a)

110

5b1

5a,5b

5

| MACHINE IDENTIFICATION NUMBER:1A | MENU |
| --- | --- |

| TOTAL REMAINING AMOUNT [kg] | 1234.5 |
| --- | --- |
| TOTAL WOUND AMOUNT [kg] | 345.6 |

INDIVIDUAL REMAINING AMOUNT [kg]

S1

| SPINDLE NUMBER:1 | 10.12 |
| --- | --- |
| SPINDLE NUMBER:2 | 9.34 |

⋮ ⋮

INDIVIDUAL WOUND AMOUNT [kg]

| SPINDLE NUMBER:1 | 1.23 |
| --- | --- |
| SPINDLE NUMBER:2 | 2.11 |

⋮ ⋮

(b)

110

5b1

5a,5b

5

MENU

S2

| PRINT |
| --- |

| FILE OUTPUT |
| --- |

| DATA ADDITION |
| --- |

| DATA TRANSMISSION |
| --- |

⋮

FIG.8

BASE LONGITUDINAL DIRECTION

| | Europäisches Patentamt European Patent Office Office européen des brevets | EUROPEAN SEARCH REPORT | Application Number EP 23 15 9366 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 856 723 A (TONE SHOICHI [JP]) 15 August 1989 (1989-08-15) * figures 1a-1f * * column 1, line 15 - line 20 * * column 4, line 3 - line 5 * * column 4, line 10 - line 16 * * column 4, line 24 - line 27 * ----- | 1-12 | INV. G05B19/409 ADD. B65H54/00 |
| Y | US 2019/177108 A1 (CHARLES EATON DAVID [GB] ET AL) 13 June 2019 (2019-06-13) * paragraph [0006] * * paragraph [0027] * ----- | 1-12 | |
| A | US 4 913 373 A (UEDA YUTAKA [JP]) 3 April 1990 (1990-04-03) * figure 2 * * column 4, paragraph 54 - column 5, paragraph 46 * ----- | 1-12 | |
| A | DE 41 41 407 B4 (RIETER AG MASCHF [CH]) 26 August 2004 (2004-08-26) * the whole document * ----- | 1-12 | TECHNICAL FIELDS SEARCHED (IPC) |
| A | EP 2 455 318 A1 (MURATA MACHINERY LTD [JP]) 23 May 2012 (2012-05-23) * the whole document * ----- | 1-12 | G05B B65H |

The present search report has been drawn up for all claims

| Place of search | Date of completion of the search | Examiner |
|---|---|---|
| The Hague | 19 July 2023 | Lefeure, Guillaume |

EPO FORM 1503 03.82 (P04C01)

## ANNEX TO THE EUROPEAN SEARCH REPORT
## ON EUROPEAN PATENT APPLICATION NO.

EP 23 15 9366

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2023

| Patent document cited in search report | | Publication date | Patent family member(s) | | Publication date |
|---|---|---|---|---|---|
| US 4856723 | A | 15-08-1989 | DE | 3808465 A1 | 29-09-1988 |
| | | | IT | 1219866 B | 24-05-1990 |
| | | | JP | H0259108 B2 | 11-12-1990 |
| | | | JP | S63225076 A | 20-09-1988 |
| | | | US | 4856723 A | 15-08-1989 |
| US 2019177108 | A1 | 13-06-2019 | CN | 109896335 A | 18-06-2019 |
| | | | DE | 102018131399 A1 | 13-06-2019 |
| | | | GB | 2569165 A | 12-06-2019 |
| | | | JP | 2019104630 A | 27-06-2019 |
| | | | US | 2019177108 A1 | 13-06-2019 |
| US 4913373 | A | 03-04-1990 | DE | 3835634 A1 | 03-05-1989 |
| | | | GB | 2211518 A | 05-07-1989 |
| | | | IT | 1224783 B | 18-10-1990 |
| | | | JP | H0633135 B2 | 02-05-1994 |
| | | | JP | H01104575 A | 21-04-1989 |
| | | | US | 4913373 A | 03-04-1990 |
| DE 4141407 | B4 | 26-08-2004 | CH | 686377 A5 | 15-03-1996 |
| | | | DE | 4141407 A1 | 17-06-1993 |
| EP 2455318 | A1 | 23-05-2012 | CN | 102471008 A | 23-05-2012 |
| | | | EP | 2455318 A1 | 23-05-2012 |
| | | | JP | 2011020838 A | 03-02-2011 |
| | | | WO | 2011007513 A1 | 20-01-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021024741 A
- JP 5873105 B
- JP H6212521 A
- JP 2002088605 A